(19) Europäisches Patentamt
European Patent Office
Office européen des brevets

(11) **EP 4 326 995 B1**

(12) **EUROPÄISCHE PATENTSCHRIFT**

(45) Veröffentlichungstag und Bekanntmachung des Hinweises auf die Patenterteilung:
**08.01.2025 Patentblatt 2025/02**

(21) Anmeldenummer: **21722150.6**

(22) Anmeldetag: **23.04.2021**

(51) Internationale Patentklassifikation (IPC):
*F16D 25/08* (2006.01)    *F16D 25/12* (2006.01)

(52) Gemeinsame Patentklassifikation (CPC):
**F16D 25/126; F16D 25/083;** F16D 13/755

(86) Internationale Anmeldenummer:
**PCT/EP2021/060668**

(87) Internationale Veröffentlichungsnummer:
**WO 2022/223128 (27.10.2022 Gazette 2022/43)**

(54) **PNEUMATISCHER AKTUATOR MIT VERSCHLEISSKOMPENSATION**

PNEUMATIC ACTUATOR WITH WEAR COMPENSATION

ACTIONNEUR PNEUMATIQUE À COMPENSATION D'USURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.02.2024 Patentblatt 2024/09**

(73) Patentinhaber: **ZF CV Systems Europe BV 1170 Brüssel (BE)**

(72) Erfinder: **WINTER, Simon 31224 Peine (DE)**

(74) Vertreter: **Schäferjohann, Volker ZF CV Systems Hannover GmbH Am Lindener Hafen 21 30453 Hannover (DE)**

(56) Entgegenhaltungen:
DE-A1- 102017 210 444    DE-A1- 102018 210 628
DE-A1- 102019 204 352

**Beschreibung**

Die Erfindung betrifft einen pneumatischen Aktuator zum Betätigen eines funktionalen Elements, insbesondere einen pneumatischen Kupplungs-Aktuator für ein Nutzfahrzeug zum Betätigen einer Kupplung des Nutzfahrzeugs, aufweisend einen pneumatischen Kolben, ein pneumatisches Gehäuse, wobei der pneumatische Kolben zum Ausführen eines Hubes entlang einer Stellachse verschiebbar in dem pneumatischen Gehäuse angeordnet ist, ein Schnittstellenhalter mit einer Schnittstelle, zum Verbinden des pneumatischen Aktuators mit dem funktionalen Element, und eine Verschleißkompensationseinrichtung, die dazu ausgebildet ist, den pneumatischen Kolben und den Schnittstellenhalter zum Übertragen einer Stellkraft von dem pneumatischen Kolben auf den Schnittstellenhalter temporär zu fixieren und die temporäre Fixierung zwischen dem pneumatischen Kolben und dem Schnittstellenhalter zum Ausgleichen einer verschleißbedingten Hubänderung des funktionalen Elements zu lösen.

In Fahrzeugen, insbesondere in Nutzfahrzeugen, gibt es mehrere Möglichkeiten, ein automatisches Getriebe zu realisieren. Neben automatischen Getrieben (AT) werden häufig automatisierte manuelle Getriebesysteme (AMT) eingesetzt. AMT-Systeme bestehen aus einem vom Aufbau herkömmlichen Handschaltgetriebe, das automatisch betätigt wird. Moderne AMT-System können aber auch auf eigens zu diesem Zweck entwickelten Getrieben basieren. In einem AMT-System wird eine Kupplung, die das Getriebe mit der Antriebswelle des Fahrzeugmotors verbindet, meist automatisch betätigt, um eine manuelle Kupplungsbetätigung zu eliminieren. Ein Kupplungs-Aktuator öffnet die Kupplung und im Anschluss daran wechselt ein Getriebeaktuator den Gang. Nach dem Gangwechsel gibt der Kupplungs-Aktuator die Kupplung frei und kuppelt die Antriebswelle und das Getriebe ein. Übliche Typen von Kupplungs-Aktuatoren sind elektromechanische, hydraulische oder pneumatische Kupplungs-Aktuatoren.

Es gibt zwei gängige Typen von pneumatischen Kupplungs-Aktuatoren. Lineare pneumatische Aktuatoren haben einen pneumatischen Kolben, der verschiebbar in einem Zylinder angeordnet ist. Beim Betätigen wird der Zylinder mit Luft gefüllt und bewegt den Kolben relativ zum Zylinder. Der Kolben ist mit einer Betätigungsstange verbunden, welche die Kupplung betätigt. Da die Antriebswelle des Fahrzeugmotors in einer Linie mit der Kupplung und dem Getriebe liegen muss, werden handelsübliche lineare pneumatische Kupplungs-Aktuatoren versetzt zur Kupplung montiert. Die Betätigungsstange ist hierfür als gabelartige Stange ausgebildet, die sich senkrecht zu einer Betätigungsrichtung des Kolbens erstreckt. Um die erforderliche mechanische Festigkeit zu erreichen, muss ein solches Betätigungssystem im Allgemeinen sehr groß und schwer sein. Außerdem werden mehrere Teile benötigt, was zu komplexen und oftmals teuren Systemen führt.

Konzentrische pneumatische Kupplungsaktuatoren bestehen aus einem pneumatischem Gehäuse und einem pneumatischen Kolben, der beweglich in einer Pneumatikkammer des pneumatischen Gehäuses angeordnet ist. Der pneumatische Kolben ist in dem pneumatischen Gehäuse hin und her verschiebbar und kann ein Funktionselement betätigen. Zur Durchführung einer Welle durch den pneumatischen Aktuator weist das pneumatische Gehäuse eine zentrale Öffnung auf. Pneumatischen Kupplungs-Aktuatoren können daher um eine An- oder Abtriebswelle herum angeordnet werden, wobei der pneumatische Kolben die Kupplung direkt betätigt. Die Notwendigkeit einer Umlenkung entfällt. Da der pneumatische Kolben die Kupplung direkt koaxial betätigt, werden mechanische Spannungen reduziert und konzentrische Kupplungs-Aktuatoren können kleiner gefertigt werden. Außerdem werden weniger Teile benötigt, was die Gesamtkosten reduziert.

Funktionale Elemente verschleißen über deren Lebensdauer. Beispielsweise haben Kupplungen für Fahrzeuge üblicherweise mit Reibbelägen versehene Kupplungsscheiben, die zum Übertragen von Kräften mit einer Kupplungsreaktionskraft aneinandergedrückt werden. Durch eine vom pneumatischen Aktuator aufgebrachte Stellkraft, die der Kupplungsreaktionskraft entgegenwirkt, können die Reibbeläge der Kupplungsscheiben voneinander getrennt werden. Beim Schließen der Kupplung kommt es zu einer Relativbewegung zwischen den beiden Kupplungsscheiben, die auch Schlupf genannt wird, wobei die Reibbeläge aneinander reiben und nur einen Teil eines an der Kupplung anliegenden Drehmoments von der einen Kupplungsscheibe auf die andere Kupplungsscheibe übertragen. Durch diese Reibung verschleißen die Reibbeläge ab.

Um den Verschleiß der Reibbeläge auszugleichen muss ein die Kupplung betätigender Aktuator einen größeren Hub ausführen. Neben einem Aktivierungshub muss also auch ein Verschleißhub durchgeführt werden. Der Verschleißhub kann den notwendigen Hub zur Öffnung der Kupplung übersteigen. Dieser Verschleißhub führt einerseits zu einem erhöhten Bedarf an Arbeitsmedium (insbesondere Luft), woraus erhöhte Betriebskosten resultieren, und andererseits zu einer verringerten Stellgenauigkeit.

Zum Ausgleichen des Verschleißes des funktionalen Elements sind daher pneumatischen Aktuatoren mit Verschleißkompensationsmechanismen bekannt.

WO 2016/184569 A1 offenbart einen Kupplungs-Aktuator mit automatischem Verschleißausgleich. Hierfür weist der Kupplungs-Aktuator ein als Kolben ausgeführtes Betätigungselement und eine Kolbenstange auf. Die Kolbenstage überträgt eine an dem Betätigungselement aufgebrachte Ausrückkraft auf die Kupplung. Das Betätigungselement weist ein Klemmelement auf. Beim Beaufschlagen des Kolbens mit der Ausrückkraft, stützt sich diese formschlüssig und kraftschlüssig auf dem Klemmelement ab. Das Klemmelement lenkt die Ausrückkraft teilweise in eine Normalkraft ab, sodass das Betätigungselement und die Kolbenstange reibschlüssig fixiert werden. Bei entgegengesetzter Kraftwirkung wird der Reibschluss aufgehoben und die Kolbenstange kann zum Längenausgleich gegen das Klemmelement gleiten. Nachteilig ist, dass die Anordnung gemäß WO 2016/184569 A1 nur für konzentrische pneumatische Aktuatoren geeignet ist. Ferner treten aufgrund der kleinen Kontaktflächen am Klemmelement sehr hohe mechanische Belastungen auf, die zu Beschädigungen führen können. Weiterhin kann der Reibschluss aufgrund der flügelartigen Ausgestaltung des Klemmelements bei hohen Lasten nicht dauerhaft sichergestellt werden.

EP 2 683 960 B1 offenbart einen selbstnachstellenden Kupplungsbetätiger zum Bedienen einer Fahrzeugkupplung mit einem Kolben, der dazu eingerichtet ist, über ein Übertragungsglied auf die Fahrzeugkupplung zu wirken. Zwischen dem Kolben und dem Übertragungsglied ist ein Kompensationsmechanismus angeordnet, der dazu in der Lage ist, zwischen einem entriegelten Zustand, in dem der seine Länge nachstellt, und einem verriegelten Zustand zu wechseln, in dem er mit einer festen Länge verriegelt ist. Der Kompensationsmechanismus weist ein formschlüssiges Getriebe auf, das jegliche Längennachstellbewegung in eine entsprechende relative Bewegung einer ersten und einer zweiten Komponente des Kompensationsmechanismus und umgekehrt umwandelt, wobei der Kompensationsmechanismus so eingerichtet ist, dass sein verriegelter Zustand bewirkt wird, indem die erste und die zweite Komponente in Reibungseingriff miteinander gebracht sind, um dadurch Längennachstellbewegungen des Kompensationsmechanismus zu verhindern. Der Kompensationsmechanismus ist dazu eingerichtet, auf den Bewegungszustand des Kolbens zu reagieren, so dass der Wechsel von dem verriegelten in den unverriegelten Zustand erfolgt, wenn der Kolben seine Endanschlagstellung infolge einer Druckentlastung der Kammer erreicht, und dass ein Wechsel vom unverriegelten in den verriegelten Zustand bewirkt wird, wenn er seine Endanschlagstellung infolge der nächsten Druckbeaufschlagung der Kammer verlässt. Der Längenkompensationsmechanismus weist einen Federmechanismus auf, der mit einer Vorspannkraft der Kupplung eine Längenänderung antreibt. Auch der Kupplungsbetätiger gemäß EP 2 683 960 B1 eignet sich nicht für konzentrische pneumatische Aktuatoren. Ferner ist der Aufbau komplex und eine erzielbare Reibkraft ist eingeschränkt, da ein Durchmesserverhältnis von Reib- zu Gewindedurchmesser gering ist. Des Weiteren kommt es an dem Kompensationsmechanismus zu hohen mechanischen Belastungen, wodurch die Lebensdauer des Kupplungsbetätigers eingeschränkt sein kann.

DE102017210444A1 offenbart eine Betätigungseinrichtung für ein Kraftfahrzeug, umfassend einen Arbeitszylinder und einen Arbeitskolben, die einen Druckraum zum befüllen mit einem Druckmedium ausbilden, wobei der Arbeitskolben einen Hauptkolben und einen Stellkolben aufweist, die gegeneinander verschiebbar ausgebildet sind, um eine veränderbare Wirklänge des Arbeitskolbens bereitzustellen, wobei an dem Arbeitskolben eine Klemmeinrichtung ausgebildet ist, die ein verschieben zwischen Hauptkolben und Stellkolben bei einem Ausrückvorgang der Betätigungseinrichtung verhindert und dadurch die Wirklänge für den Ausrückvorgang fixiert.

DE102019204352A1 betrifft eine Druckfluid-Betätigungsanordnung für eine Reibungskupplung, umfasst ein erstes Betätigungselement und ein mit dem ersten Betätigungselement eine Druckfluidkammer begrenzendes zweites Betätigungselement, wobei durch Einleitung von Druckfluid in die Druckfluidkammer das zweite Betätigungselement aus einer Grundpositionierung bezüglich des ersten Betätigungselements in einer Betätigungsrichtung entlang einer Bewegungsachse bewegbar ist.

DE102018210628A1 offenbart einen selbstnachstellender Kupplungssteller zur Betätigung einer Kupplung, aufweisend ein Übertragungselement, das in eine Verschiebungsrichtung verschiebbar vorgesehen ist, einen Kompensationsmechanismus, mit einem Kolben, der in Verschiebungsrichtung des Übertragungselementes verschiebbar vorgesehen ist, wobei der Kompensationsmechanismus dazu ausgebildet ist, eine Relativverschiebung des Übertragungselementes in Verschiebungsrichtung gegenüber dem Kolben zu ermöglichen.

Aufgabe der vorliegenden Erfindung ist es, einen pneumatischen Aktuator der vorstehend genannten Art anzugeben, der flexibel einsetzbar ist und gegenüber dem Stand der Technik ein insbesondere sichereres und/oder zuverlässigeres Übertragen von Stellkräften erlaubt.

Die Erfindung löst die Aufgabe bei einem pneumatischen Aktuator der eingangs genannten Art in einem ersten Aspekt dadurch, dass die Verschleißkompensationseinrichtung eine Extensionshülse aufweist. Eine Extensionshülse ist eine Hülse, deren Durchmesser durch Aufbringen einer Längenänderung variiert werden kann. Durch Dehnen der Extensionshülse in Längsrichtung kann der Durchmesser der Extensionshülse verkleinert, d.h. die Extensionshülse kontrahiert, werden. Durch Stauchen der Extensionshülse, also durch Verkürzen der Extensionshülse in Längsrichtung, vergrößert bzw. erweitert sich der Durchmesser der Extensionshülse. Es soll verstanden werden, dass die Extensionshülse weitergebildet ist, um den Kontraktions- bzw. Erweiterungseffekt zu bewirken, und dass nicht jedes Rohrelement eine Extensionshülse im Sinne der Erfindung darstellt. So wird auch der Durchmesser einfacher Rohre bei Dehnung in Längsrichtung geringfügig kontrahiert. Dieser Effekt ist aber äußert gering, sodass ein einfaches Rohr keine Extensionshülse darstellt. Der pneumatische Aktuator kann sowohl als (externer) linearer pneumatischer Aktuator, als auch als konzentrischer pneumatischer Aktuator ausgeführt sein, wobei eine Ausgestaltung als konzentrischer pneumatischer Aktuator bevorzugt ist.

Das Kontrahieren und Erweitern kann auch nur partiell erfolgen und muss nicht über eine gesamte Erstreckung der Extensionshülse in deren Längsrichtung erfolgen. Die Extensionshülse kann vorzugsweise beidseitig offen, also röhrenförmig, oder einseitig geschlossen ausgebildet sein. Die Extensionshülse muss auch nicht analog zu Extensionshülsen für medizinische Anwendungen ausgebildet sein. So kann die Extensionshülse als Geflecht ausgebildet sein, muss dies aber nicht. Vorzugsweise ist im entspannten Zustand eine Länge der Extensionshülse kleiner als der Durchmesser. So wird eine axial kurze Bauweise erreicht und Bauraum eingespart. Es kann aber auch vorgesehen sein, dass der Durchmesser der Extensionshülse im entspannten Zustand kleiner ist als deren Länge. Vorzugsweise kann die Extensionshülse auch Durchmessersprünge bzw. Absätze aufweisen.

Die Stellachse ist die Achse, entlang der der pneumatische Kolben beim Betätigen verschiebbar ist. Bei einem pneumatischen Gehäuse, das zum Aufnehmen des Kolbens einen zylindrischen Hohlraum definiert, wird die Stellachse beispielsweise durch die Zentralachse des zylindrischen Hohlraums definiert. Vorzugsweise sind die Stellachse und eine Betätigungsachse des funktionalen Elements, entlang derer das funktionale Element beim Betätigen bewegt wird, parallel, besonders bevorzugt kongruent.

Die Stellkraft ist vorzugsweise entlang der Stellachse, insbesondere parallel zur Stellachse, orientiert. Wenn der pneumatische Kolben und der Schnittstellenhalter durch die Verschleißkompensationseinrichtung temporär fixiert sind, dann wirkt eine entlang der Stellachse auf den pneumatischen Kolben wirkende Stellkraft bevorzugt ebenfalls entlang der Stellachse auf den Schnittstellenhalter. Vorzugsweise ist die Verschleißkompensationseinrichtung dazu ausgebildet, die temporäre Fixierung zwischen dem pneumatischen Kolben und dem Schnittstellenhalter zu lösen, wenn keine Stellkraft übertragen wird. Eine Extensionshülse ermöglicht ein einfaches und sicheres Übertragen hoher Stellkräfte. Ferner sind Extensionshülsen robust gegenüber mechanischen Beanspruchungen und können kosteneffizient hergestellt werden. Des Weiteren kann mittels einer Extensionshülse eine bidirektionale Verschleißkompensationseinrichtung bereitgestellt werden. So kann beispielsweise beim Einbau einer neuen Kupplung auch eine zum Verschleißausgleich entgegengesetzte Verkürzung bzw. Verlängerung des Verschleißkompensationseinrichtung erreicht werden.

Um das funktionale Element zu betätigen, muss der pneumatische Aktuator einen Hub ausführen. Eine verschleißbedingte Hubänderung ist diejenige Änderung dieses Hubs, die durch einen Verschleiß des funktionalen Elements hervorgerufen wird. Ist das funktionale Element beispielsweise eine Kupplung, können Reibbeläge dieser Kupplung über deren Lebensdauer verschleißen und kleiner werden. Zum Betätigen der Kupplung muss dann von einem pneumatischen Aktuator ein im Vergleich zum Neuzustand der Kupplung größerer oder kleinerer Hub durchgeführt werden. Es muss also von dem pneumatischen Aktuator zusätzlich oder abzüglich zu einem Arbeitshub, der zum Betätigen einer neuen Kupplung nötig ist, ein Verschleißhub durchgeführt werden. Diese Änderung des durchzuführenden Hubs des pneumatischen Aktuators ist die verschleißbedingte Hubänderung.

In einer ersten bevorzugten Ausführungsform ist zum Erzeugen der temporären Fixierung zwischen der Extensionshülse und dem Schnittstellenhalter durch radiale Kontraktion der Extensionshülse eine Radialkraft erzeugbar, die von der Extensionshülse auf den Schnittstellenhalter wirkt. Zum Erzeugen der radialen Kontraktion der Extensionshülse wird diese in Längsrichtung gedehnt. Hierfür wirkt beim Übertragen der Stellkraft von dem pneumatischen Kolben auf den Schnittstellenhalter eine Längskraft, die vorzugsweise identisch zur Stellkraft ist, auf die Extensionshülse. Vorzugsweise wird die Extensionshülse beim Übertragen der Stellkraft also gedehnt. Es kann aber auch vorgesehen sein, dass die Extensionshülse beim Übertragen der Stellkraft gestaucht wird. Zum temporären Fixieren von pneumatischem Kolben und Schnittstellenhalter wird die Radialkraft erzeugt, die von der Extensionshülse auf den Schnittstellenhalter wirkt. Durch die Radialkraft wird zwischen der Extensionshülse und dem Schnittstellenhalter ein Reibschluss bewirkt. Der Reibschluss verhindert vorzugsweise eine Relativbewegung zwischen der Extensionshülse und dem Schnittstellenhalter. Die Radialkraft skaliert vorzugsweise mit der Stellkraft.

Bevorzugt ist die Radialkraft im Wesentlichen direkt proportional zur Stellkraft. Vorzugsweise ist die Stellkraft proportional zur Radialkraft. Die Stellkraft ist insbesondere dann im Wesentlichen direkt proportional zur Stellkraft, wenn ein Kraftanteil einer Feder der Verschleißkompensationseinrichtung vernachlässigt wird. Wenn die Stellkraft, die von dem pneumatischen Kolben auf den Schnittstellenhalter übertragen wird, zunimmt, dann steigt aufgrund des direkt proportionalen Zusammenhangs auch die Radialkraft an. Die Radialkraft bewirkt den Reibschluss bzw. die hierfür nötige Reibkraft. Beim Erhöhen der zu übertragenden Stellkraft steigt die Reibkraft, sodass die Fixierung zwischen pneumatischen Kolben und Schnittstellenhalter verstärkt wird. Mittels der Extensionshülse können so auch hohe Stellkräfte sicher übertragen werden. Ein Durchrutschen bzw. ungewolltes relatives Gleiten des Schnittstellenhalters zum pneumatischen Kolben kann effektiv verhindert werden. Beschädigungen der Komponenten des pneumatischen Aktuators werden verhindert und Stellkräfte können zuverlässig übertragen werden. Vorzugsweise ist die Radialkraft linear proportional zur Stellkraft. Eine Verdoppelung der Stellkraft bewirkt dann beispielsweise auch eine Verdoppelung der Radialkraft.

In einer weiteren bevorzugten Ausgestaltung weist ein Kräfteverhältnis zwischen der Radialkraft und der Stellkraft einen Wert von 10 oder größer auf. Das Kräfteverhältnis bestimmt sich durch Teilen des Werts der Radialkraft durch den Wert der Stellkraft. Bei einem Kräfteverhältnis von 10 hat die Radialkraft den zehnfachen Wert der Stellkraft. Der Erfinder hat herausgefunden, dass insbesondere mit einem Kräfteverhältnis von 10 oder größer ein sicheres Übertragen von Stellkräften möglich ist. So wird bei diesem Kräfteverhältnis ein Durchrutschen effektiv verhindert da übliche Reibwerte im Bereich 0,1 oder höher liegen. Vorzugsweise ist das Kräfteverhältnis größer oder gleich einem inversen Wert eines Reibwerts zwischen der Extensionshülse und dem Schnittstellenhalter.

In einer Variante weist die Extensionshülse einen ersten Extensionsschlitz auf, der sich in einer ersten Gangrichtung helixförmig um die Stellachse erstreckt. Es kann auch vorgesehen sein, dass sich der erste Extensionsschlitz helixförmig um eine Zentralachse der Extensionshülse erstreckt. Der erste Extensionsschlitz erstreckt sich vorzugsweise in einer Seitenwand der Extensionshülse. Bevorzugt erstreckt sicher der ersten Extensionsschlitz in radialer Richtung vollständig durch die Hülsenwand der Extensionshülse. Der erste Extensionsschlitz erstreckt sich also vorzugsweise vollständig von einem Innendurchmesser der Extensionshülse zu einem Außendurchmesser. Synonym zu helixförmig kann die Erstreckung des Extensionsschlitzes auch als wendelförmig oder schraubenförmig beschrieben werden. Die Gangrichtung, die auch als Windungsrichtung oder Helizität bezeichnet werden kann, wird durch Betrachten entlang der Stellachse bestimmt. Der Extensionsschlitz bewirkt vorzugsweise den Kontraktions- bzw. Erweiterungseffekt der Extensionshülse. Durch das Vorsehen des Extensionsschlitzes kann die Extensionshülse in Längsrichtung stärker gedehnt werden, wobei der Extensionsschlitz dann eine verbesserte Kontraktion bzw. Aufweitung quer zur Längsrichtung (in Durchmesserrichtung) ermöglicht.

Vorzugsweise weist der Extensionsschlitz entlang der Stellachse zumindest eine halbe Windung, vorzugsweise eine vollständige Windung, auf. Vorzugsweise weist der Extensionsschlitz 0,25 bis 4, bevorzugt 0,5 bis 3, bevorzugt 0,5 bis 2, besonders bevorzugt 0,5 bis 1,5 vollständige Windungen auf. Eine Windung erstreckt sich in Umfangsrichtung einmal über den gesamten Umfang, sodass Anfang und Ende einer vollständigen Windung nur in Längsrichtung der Helix zueinander versetzt sind. Eine durch die Extensionshülse erzeugbare Radialkraft ist direkt proportional zur Anzahl der Windungen des ersten Extensionsschlitzes. So ist die erzeugbare Radialkraft für eine identischen Längskraft bei zwei vollständigen Windungen doppelt so groß wie bei einer Windung des Extensionsschlitzes aber nur halb so groß wie bei Vorhandensein von insgesamt vier Windungen. Die von der Extensionshülse bereitgestellte Radialkraft ist in vorteilhafter Weise durch Wahl der Windungszahl skalierbar. Vorzugsweise wird die Stellkraft als Längskraft auf die Extensionshülse übertragen. Die Anzahl der Windungen kann dann vorteilhaft so gewählt werden, dass ein Reibschluss beim Übertragen der Stellkraft immer zuverlässig bewirkt werden kann.

Weiter ist bevorzugt, dass der erste Extensionsschlitz einen ersten Steigungswinkel in einem Bereich von größer 0° bis 20°, vorzugsweise 1° bis 20°, weiter bevorzugt 1° bis 15°, weiter bevorzugt 1° bis 12°, weiter bevorzugt 1° bis 10°, weiter bevorzugt 2° bis 10°, weiter bevorzugt 2° bis 8°, weiter bevorzugt 2° bis 6°, besonders bevorzugt 3° bis 6°, aufweist. Der Steigungswinkel bestimmt die Steigung und das Steigungsverhältnis des ersten Extensionsschlitzes. Die Steigung ist die Erstreckung einer vollständigen Windung in Längsrichtung der Extensionshülse. Das Steigungsverhältnis bestimmt sich als die Erstreckung einer vollständigen Windung in radialer Richtung geteilt durch die Erstreckung einer vollständigen Windung in Längsrichtung. Die mittels der Extensionshülse erzeugbare Radialkraft ist indirekt proportional zum Steigungswinkel. Je kleiner der Steigungswinkel ist, d.h. je flacher die Steigung ist, desto größer ist die von der Extensionshülse bereitstellbare Radialkraft. Der Erfinder hat herausgefunden, dass mittels eines Steigungswinkels im bevorzugten Bereich ein besonders sicheres und zuverlässiges Übertragen von Stellkräften möglich ist. Vorzugsweise ist die Steigung bzw. der Steigungswinkel des ersten Extensionsschlitzes konstant. Es kann aber auch vorgesehen sein, dass der Extensionsschlitz eine variable Steigung aufweist. Beispielsweise können zwischen Au-ßenwindungen liegende Mittenwindungen eine größere oder kleinere Steigung aufweisen, als die Außenwindungen.

In einer weiteren bevorzugten Ausführungsform weist die Extensionshülse einen zweiten Extensionsschlitz auf, der sich einer zweiten Gangrichtung helixförmig um die Stellachse erstreckt. Die Extensionshülse kann auch mehr als zwei, vorzugsweise 2 bis 10, besonders bevorzugt 3 bis 6, Extensionsschlitze aufweisen. Durch eine Mehrzahl von Extensionsschlitzen können Lasten gleichmäßig auf die Extensionshülse verteilt werden. Es soll verstanden werden, dass die zweite Gangrichtung auch identisch zur ersten Gangrichtung sein kann. Der erste Extensionsschlitz und der zweite Extensionsschlitz können beispielsweise beide rechtsgängig ausgebildet sein. Vorzugsweise weist der zweite Extensionsschlitz einen zweiten Steigungswinkel auf, der identisch zum ersten Steigungswinkel ist. Ferner weist auch der zweite Extensionsschlitz vorzugsweise zumindest eine halbe , besonders bevorzugt eine vollständige, Windungen aufweisen. Es kann aber auch vorgesehen sein, dass der erste Extensionsschlitz und der zweite Extensionsschlitz voneinander verschiedene Gangrichtungen, Windungszahlen und/oder Steigungswinkel aufweisen. Vorzugsweise überlappen der erste Extensionsschlitz und der zweite Extensionsschlitz teilweise oder vollständig. Es kann auch vorgesehen sein, dass der erste Extensionsschlitz und der zweite Extensionsschlitz in Richtung der Stellachse zueinander versetzt angeordnet sind.

In einer bevorzugten Ausgestaltung weist der pneumatische Aktuator eine Mehrzahl von Extensionsschlitzen auf, wobei sich die Mehrzahl von Extensionsschlitzen in Form einer Mehrfachhelix, insbesondere als Doppelhelix, Dreifachhelix oder Vierfachhelix, um die Stellachse erstrecken. Es soll verstanden werden, dass der pneumatische Aktuator im Falle einer Doppelhelix zumindest zwei Extensionsschlitze, im Fall einer Dreifachhelix zumindest drei Extensionsschlitze, etc. aufweisen muss. Eine Mehrfachhelixanordnung ermöglicht ein besonders sicheres und gleichmäßiges Übertragen von Stellkräften. Ferner können durch eine Mehrfachhelixanordnung (Doppelhelix, Dreifachhelix, Vierfachhelix, etc.) Kippmomente effektiv verhindert werden, die beim Aufbringen externer Kräfte auf die Extensionshülse entstehen können. Es kann auch vorgesehen sein, dass Enden der Extensionsschlitze entlang der Stellachse teilweise zueinander versetzt angeordnet sind. Besonders bevorzugt ist die Mehrfachhelix eine Doppelhelix, Dreifachhelix, Vierfachhelix, Fünffachhelix, Sechsfachhelix, Siebenfachhelix, Achtfachhelix, Neunfachhelix oder Zehnfachhelix. Eine Verformung der Extensionshülse ist umso gleichmäßiger, je höher die Anzahl der Extensionsschlitze der Helixanordnung ist. Allerdings steigen mit zusätzlicher Anzahl der Extensionsschlitze auch die Herstellungskosten. Der Erfinder hat herausgefunden, dass mit einer Mehrfachhelixanordnung aus dem vorstehend genannten Bereich (Doppelhelix bis Zehnfachhelix) besonders günstige Anwendungseigenschaften der Extensionshülse bei geringen Herstellungskosten erreicht werden können.

Vorzugsweise weist der pneumatische Aktuator eine Torsionssicherung zum Verhindern einer relativen Rotationsbewegung zwischen der Extensionshülse und dem Schnittstellenhalter auf. Eine Torsionssicherung verhindert, dass die Extensionshülse beim Dehnen und/oder Stauchen eine Torsionsbewegung durchführt, die der Kontraktion und/oder Aufweitung der Extensionshülse entgegenwirken kann. Die Torsionssicherung erlaubt so ein zuverlässiges Übertragen von Stellkräften.

In einer bevorzugten Ausführungsform sind die erste Gangrichtung des ersten Extensionsschlitzes und die zweite Gangrichtung des zweiten Extensionsschlitzes einander entgegengesetzt.

Weiter ist bevorzugt, dass die Extensionshülse eine Sicherungsnut aufweist, die sich in Richtung der Stellachse erstreckt, wobei die Verdrehsicherung ein Sicherungselement aufweist, das in die Sicherungsnut eingreift. Bevorzugt greift das Sicherungselement formschlüssig in die Sicherungsnut ein. Vorzugsweise ist die Sicherungsnut in Richtung der Stellachse versetzt zu dem ersten und/oder zweiten Extensionsschlitz angeordnet. Es kann aber auch vorgesehen sein, dass die Sicherungsnut im Bereich zumindest eines der Extensionsschlitze angeordnet ist. Besonders bevorzugt erstreckt sich die Sicherungsnut in Richtung der Stellachse vollständig durch eine Helixregion, in der sich der Extensionsschlitz entlang der Stellachse durch die Extensionshülse erstreckt. Eine Torsion tritt gegebenenfalls in demjenigen Abschnitt der Extensionshülse (betrachtet entlang der Stellachse) auf, in dem sich der Extensionsschlitz erstreckt. Die Torsionssicherung kann also vorzugsweise nur in diesem Abschnitt (der Helixregion) vorgesehen sein. Es kann aber auch vorgesehen sein, dass sich der Extensionsschlitz vollständig durch die Extensionshülse erstreckt. In Durchmesserrichtung erstreckt sich die Sicherungsnut vorzugsweise nur teilweise durch die Extensionshülse. Vorzugsweise kann die Torsionssicherung auch mehrere Sicherungselemente aufweisen, die vorzugsweise in verschiedene Sicherungsnuten der Extensionshülse eingreifen. Wenn die Torsionssicherung mehrere Sicherungselemente aufweist, sind diese vorzugsweise in Umfangsrichtung der Extensionshülse versetzt, besonders bevorzugt regelmäßig versetzt, zueinander angeordnet. Das Sicherungselement ist vorzugsweise ein Passstift oder eine Passfeder. Das Sicherungselement kann aber vorzugsweise auch ein Zapfen des Schnittstellenhalters sein.

In einer weiteren Ausgestaltung weist die Extensionshülse eine erste Teilhülse und eine zweite Teilhülse auf, die zueinander koaxial angeordnet und miteinander verbunden sind. Vorzugsweise haben die erste Teilhülse und die zweite Teilhülse einen identischen Durchmesser.

Vorzugsweise ist die zweite Teilhülse radial innerhalb der ersten Teilhülse angeordnet, wobei ein erstes Ende der ersten Teilhülse mit einem benachbarten ersten Ende der zweiten Teilhülse verbunden ist, und wobei ein zweites Ende der ersten Teilhülse, das dem ersten Ende der ersten Teilhülse entlang der Stellachse gegenüberliegt, mit einem zweiten Ende der zweiten Stellhülse, das dem ersten Ende der zweiten Teilhülse entlang der Stellachse gegenüberliegt, verbunden ist. Die beiden Teilhülsen sind also an zwei gegenüberliegenden Ende verbunden. Zwischen den verbundenen Enden sind die Teilhülsen vorzugsweise verbindungsfrei. Verbindungsfreie Teilhülsen sind nicht stoffschlüssig verbunden. Die Teilhülsen können, insbesondere an zylindrischen Mantelflächen aneinander anliegen..

Vorzugsweise sind die Enden der Teilhülsen stoffschlüssig verbunden. Beispielsweise können die erste Teilhülse und die zweite Teilhülse miteinander verschweißt sein. Ferner können die erste Teilhülse und die zweite Teilhülse aber auch durch Verkleben, Klemmen, Verschrauben, Vernieten, Verpressen und/oder Verlöten miteinander verbunden sein. Vorzugsweise haben Extensionsschlitze der Teilhülsen gegenläufig orientierte Gangrichtungen, sodass die Teilhülsen zumindest teilweise als wechselseitige Torsionssicherung ausgebildet sind. Vorzugsweise sind die erste Teilhülse und die zweite Teilhülse so aneinander angepasst, dass deren Kontraktionsverhalten unter Last im Wesentlichen identisch ist. Beim Aufbringen einer Last auf die Enden der Extensionshülse soll sich die erste Teilhülse demnach im Wesentlichen identisch zur zweiten Teilhülse kontrahieren. Vorzugsweise können die Teilhülsen hierzu, mit Ausnahme von verschiedenen Durchmessern und der gegenläufigen Gangrichtungen im Wesentlichen identisch ausgebildet sein. So können beispielsweise Wandstärken, Steigungswinkel der Extensionsschlitze, Schlitzbreiten der Extensionsschlitze und/oder Windungszahlen der Extensionsschlitze beider Teilhülsen im Wesentlichen identisch sein. Insbesondere die Schlitzbreite, Windungszahl und/oder der Steigungswinkel der Extensionsschlitze können aber auch verschieden sein, um ein Kontraktionsverhalten der ersten Teilhülse auf ein Kontraktionsverhalten der zweiten Teilhülse abzustimmen.

Vorzugsweise weist die Extensionshülse ein erstes Ende und ein dem ersten Ende entlang der Stellachse gegenüberliegendes zweites Ende auf, wobei das erste Ende in Richtung der Stellachse an dem pneumatischen Kolben anliegt. Vorzugsweise ist das erste Ende als Kragen ausgebildet, der in Richtung der Stellachse an dem pneumatischen Kolben anliegt. Bevorzugt ist das erste Ende umfangssymmetrisch ausgebildet. Alternativ oder zusätzlich kann die Extensionshülse eine oder mehrere Haltenasen zum Anlegen an den pneumatischen Kolben aufweisen.

In einer weiteren Ausführungsform weist der pneumatische Aktuator eine Feder auf, die den Schnittstellenhalter gegen das zweite Ende der Extensionshülse vorspannt. Wenn zwischen der Extensionshülse und dem Schnittstellenhalter kein Reibschluss ausgebildet ist, kann die Feder den Schnittstellenhalter vorzugsweise relativ zur Extensionshülse bewegen. Vorzugsweise ist die Feder radial in der Extensionshülse angeordnet.

Weiterhin bevorzugt weist der pneumatische Aktuator ein Entkopplungselement auf, das dazu ausgebildet ist, den pneumatischen Kolben in einer Endstellung von dem Schnittstellenhalter zu entkoppeln und den Schnittstellenhalter kraftleitend unmittelbar oder mittelbar mit dem pneumatischen Gehäuse zu verbinden. Die Endstellung des pneumatische Kolbens ist diejenige Stellung, die der pneumatische Kolben einnimmt, wenn keine Stellkraft übertragen werden soll. Es soll verstanden werden, dass der pneumatische Kolben auch bei einer mittelbaren Verbindung von Schnittstellenhalter und pneumatischen Gehäuse entkoppelt (lastfrei) ist. Beispielsweise könnte eine mittelbare Verbindung durch eine zwischen dem pneumatischen Gehäuse und dem Schnittstellenhalter angeordnete Zwischenplatte realisiert sein. In der Endstellung entkoppelt das Entkopplungselement den pneumatischen Kolben, sodass über die Schnittstelle auf den Schnittstellenhalter aufgebrachte Kräfte nicht auf den Kolben übertragen werden, sondern unmittelbar über das Gehäuse abgeleitet werden. Hierdurch kann eine Belastung des Kolbens in der Endstellung verhindert werden. Ein Verschleiß des Kolbens wird reduziert und Beschädigungen werden verhindert. Vorzugsweise entkoppelt das Entkopplungselement ergänzend und/oder alternativ die Extensionshülse, sodass in der Endstellung des pneumatischen Kolbens keine oder reduzierte Längskräfte auf die Extensionshülse wirken. Hierdurch kann ein Reibschluss zwischen der Extensionshülse und dem Schnittstellenhalter verhindert oder abgeschwächt werden. So sind die Extensionshülse und der Schnittstellenhalter in der Endstellung vorzugsweise relativ zueinander bewegbar. Vorzugsweise wird auch in der Endstellung, bei entkoppeltem pneumatischen Zylinder, eine Vorspannkraft auf die Schnittstelleneinheit übertragen. Vorzugsweise wird die Vorspannkraft von der Feder auf den Schnittstellenhalter aufgebracht, wobei die Vorspannkraft vorzugsweise über die Extensionshülse und das Entkopplungselement an dem Gehäuse abgestützt ist. Besonders bevorzugt liegt eine von der Feder aufgebrachte Vorspannkraft in einem Bereich von 100N bis 1kN, bevorzugt 100N bis 900N, bevorzugt 100N bis 800N, bevorzugt 100N bis 700N, bevorzugt 100N bis 600N, bevorzugt 100N bis 500N, bevorzugt 200N bis 500N, bevorzugt 200N bis 400N, besonders bevorzugt, 250N bis 350N.

Gemäß einer bevorzugten Ausführungsform, ist der pneumatische Kolben ein Ringkolben, der an zumindest einer äußeren Führungsfläche in dem Gehäuse geführt ist und einen inneren Aufnahmeraum aufweist, wobei der Schnittstellenhalter und die Verschleißkompensationseinrichtung zumindest abschnittsweise in dem inneren Aufnahmeraum angeordnet sind. Die äußere Führungsfläche kann sowohl radial innerhalb als auch radial außerhalb des inneren Aufnahmeraums angeordnet sein. Die äußere Führungsfläche ist eine dem inneren Aufnahmeraum abgewandte Fläche des pneumatischen Zylinders. Beispielsweise kann ein Ringkolben an einer radial inneren Mantelfläche an einem korrespondierenden Führungsschaft des pneumatischen Gehäuses geführt sein. Zusätzlich oder alternativ kann der Kolben an einer radial äußeren Mantelfläche in dem pneumatischen Gehäuse geführt sein. Das Anordnen der Verschleißkompensationseinrichtung und des Schnittstellenhalters in dem inneren Aufnahmeraum ermöglicht eine einfache und besonders kompakte Ausgestaltung des pneumatischen Aktuators. Vorzugsweise weist der pneumatische Kolben einen im Wesentlichen u-förmigen Querschnitt auf, der den Aufnahmeraum definiert. Die äußere Führungsfläche kann vorzugsweise durch eine oder mehrere Gleitbuchsen gebildet sein. Vorzugsweise ist der pneumatische Kolben als Ringkolben ausgebildet, insbesondere dann, wenn der pneumatische Aktuator ein konzentrischer pneumatischer Aktuator ist.

Bevorzugt erstreckt sich der erste Extensionsschlitz über einen Längsabschnitt von 10% bis weniger als 100 %, vorzugsweise 10% bis 90%, vorzugsweise 10% bis 80%, vorzugsweise 20% bis 80%, vorzugsweise 20% bis 70%, vorzugsweise 30% bis 70%, vorzugsweise 30% bis 60%, vorzugsweise 30% bis 50%, besonders bevorzugt 40% bis 60%, einer axialen Länge der Extensionshülse. Die axiale Länge der Extensionshülse wird entlang der Längsachse der Extensionshülse ermittelt, die vorzugsweise parallel zur Stellachse ist. Es kann auch vorgesehen sein, dass sich mehrere Extensionsschlitze gemeinsam über den bevorzugten Längsabschnitt erstrecken. Beispielsweise kann der erste Extensionsschlitz sich über einen Längenabschnitt von 30% erstrecken und der zweite Extensionsschlitz über einen in Längsrichtung der Extensionshülse versetzten Längenabschnitt von 30% erstrecken, sodass sich die Extensionsschlitze dann gemeinsam über einen Längenabschnitt von 60% erstrecken. Mit einem sich über den bevorzugten Längsabschnitt erstreckenden ersten Extensionsschlitz kann eine ausreichende Flexibilität der Extensionshülse erreicht werden.

Weiter ist bevorzugt, dass der Reibschluss durch radiale Kontraktion der Extensionshülse um 0% bis 5%, vorzugsweise 0,01% bis 4,5%, vorzugsweise 0,0% bis 4,5%, vorzugsweise 0,01% bis 4%, bevorzugt 0,01% bis 3%, bevorzugt 0,01% bis 1 %, besonders bevorzugt 0,01% bis 0,05% eines Innendurchmessers der Extensionshülse erzeugbar ist. Die Extensionshülse kann im entspannten Zustand bereits an dem Schnittstellenhalter anliegen. Ein Reibschluss liegt allerdings nicht vor, solange die Extensionshülse entspannt ist. Dennoch ist im Fall einer an dem Schnittstellenhalter anliegenden Extensionshülse nur eine infinitesimal kleine Kontraktion (eine Kontraktion von 0%) nötig um den Reibschluss herzustellen. Zum Ermitteln der Kontraktion Entscheidend ist der kontrahierte Innendurchmesser im Vergleich zum Innendurchmesser im unbelasteten Zustand maßgebend. Verringert sich beispielsweise ein Innendurchmesser von 100 mm beim Kontrahieren auf 99 mm, entspricht das einer Kontraktion von 1%. Durch die bevorzugte Kontraktion zum erzeugen des Reibschlusses kann eine geringe Belastung der Extensionshülse sichergestellt werden.

Ferner ermöglicht eine große Kontraktion das vorsehen größerer Spalte, wodurch die Fertigung und Montage des pneumatischen Aktuators erleichtert wird.

Vorzugsweise ist die Extensionshülse zumindest abschnittsweise aus Stahl, besonders bevorzugt aus einem für Tiefziehprozesse geeigneten Stahl und/oder Federstahl, hergestellt. Bevorzugt ist der Schnittstellenhalter zumindest abschnittsweise aus Stahl, besonders bevorzugt aus Gußstahl oder Gußeisen, hergestellt. Ferner bevorzugt sind der pneumatische Kolben und/oder das pneumatische Gehäuse zumindest abschnittsweise aus Aluminium, vorzugsweise Druckguß- , Sandguß- oder Kaltumformlegierungen hergestellt. Alternativ oder ergänzend ist das pneumatische Gehäuse zumindest abschnittsweise aus Stahl, insbesondere einem für Tiefziehprozesse geeigneten Stahl, hergestellt. Es soll verstanden werden, dass die Begriffe Stahl bzw. Aluminium auch Legierungen umfassen.

In einem zweiten Aspekt wird die eingangs genannte Aufgabe gelöst durch eine Kupplungsanordnung für ein Nutzfahrzeug, aufweisend eine Kupplung und einen pneumatischen Aktuator gemäß dem ersten Aspekt der Erfindung, wobei der pneumatische Aktuator zum Öffnen und/oder Schließen der Kupplung vorgesehen ist.

In einem dritten Aspekt löst die Erfindung die eingangs genannte Aufgabe durch ein Nutzfahrzeug, aufweisend eine Kupplungsanordnung gemäß dem zweiten Aspekt der Erfindung. Es soll verstanden werden, dass der pneumatische Aktuator gemäß dem ersten Aspekt der Erfindung, die Kupplungsanordnung gemäß dem zweiten Aspekt der Erfindung sowie das Fahrzeug gemäß dem dritten Aspekt der Erfindung gleiche oder ähnliche Unteraspekte aufweisen, wie sie insbesondere in den abhängigen Ansprüchen niedergelegt sind. Insofern wird für diese Aspekte vollumfänglich auf die obige Beschreibung Bezug genommen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen.

Dabei ist zu berücksichtigen, dass vielfältige Modifikationen und Änderungen betreffend die Form und das Detail einer Ausführungsform im Rahmen des durch die Ansprüche festgelegten Schutzbereichs vorgenommen werden können.

Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsform sowie anhand der Zeichnungen, diese zeigen in:

Figur 1a     eine schematische Kupplungsanordnung mit einem pneumatischen Aktuator und einer geschlossen Kupplung;

Figur 1b     die Kupplungsanordnung gemäß Figur 1a, wobei die Kupplung geöffnet ist;

Figur 2a     eine Schnittansicht eines pneumatischen Aktuators in einem Ausgangszustand, wobei der pneumatische Aktuator unbetätigt ist;

Figur 2b     die Schnittansicht gemäß Figur 2b, wobei der pneumatische Aktuator betätigt ist;

Figur 2c     eine Schnittansicht eines pneumatischen Aktuators in einem Zustand mit maximaler Verschleißkompensation, wobei der pneumatische Aktuator betätigt ist;

Figur 2d     die Schnittansicht gemäß Figur 2d, wobei der pneumatische Aktuator unbetätigt ist;

Figur 3a     eine Schnittansicht durch erste Ausführungsform einer Extensionshülse;

Figur 3b     eine Schnittansicht durch einer alternative Ausführungsform einer Extensionshülse;

Figur 3c     eine doppelte Halbschnittansicht einer alternativen Ausführungsform einer Extensionshülse;

Figur 4     eine Kupplungsanordnung mit einem linearen Aktuator, und in

Figur 5     ein Nutzfahrzeug mit einer Kupplungsanordnung.

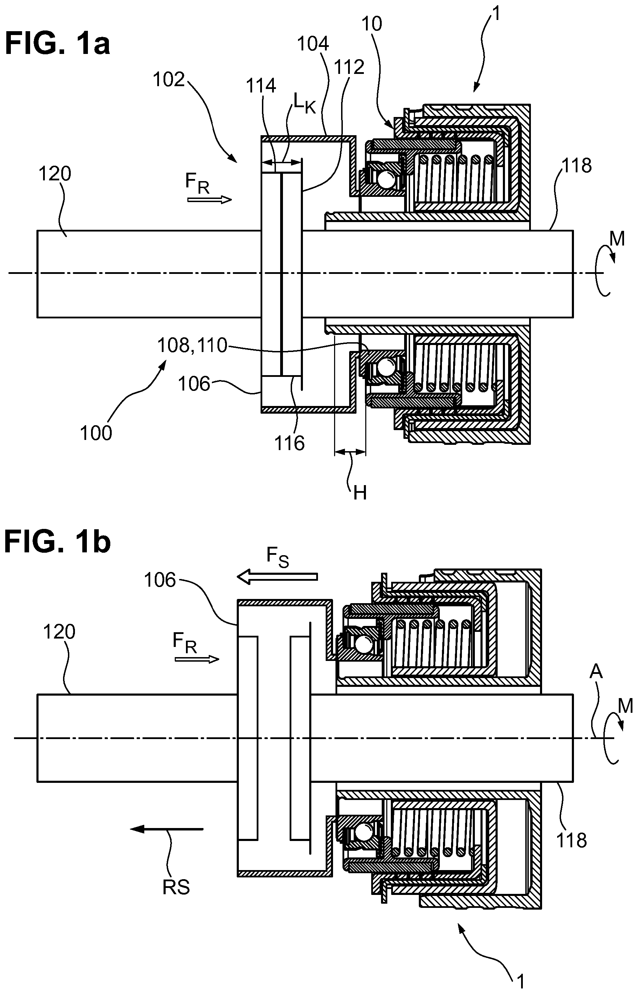

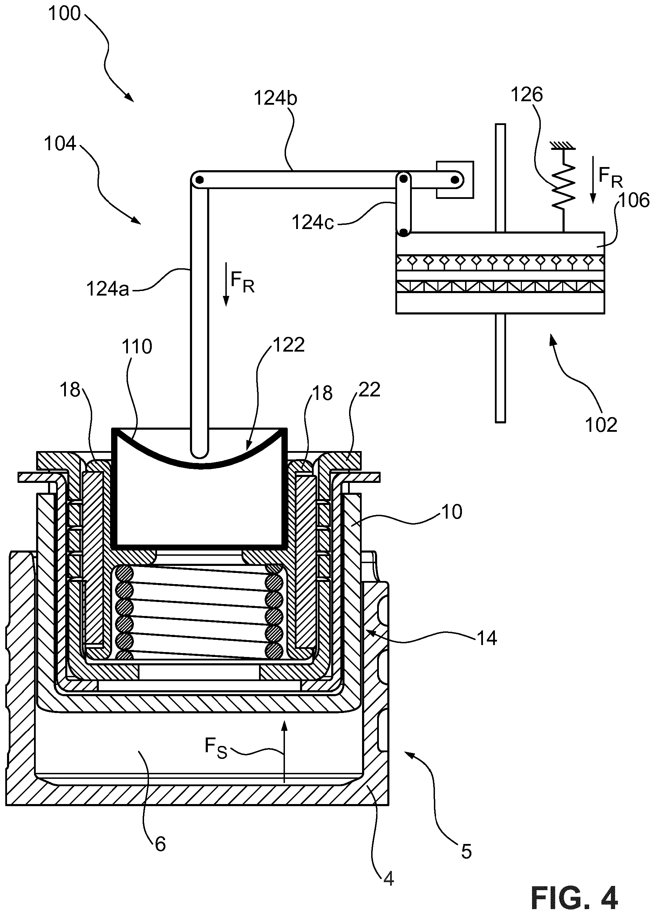

Eine Kupplungsanordnung 100 weist einen pneumatischen Aktuator 1 und ein funktionales Element 101 auf, das hier eine Kupplung 102 ist. Der pneumatische Aktuator ist hier als konzentrischer pneumatischer Aktuator 1 ausgebildet. Die Kupplung 102 und der pneumatische Aktuator 1 sind durch einen Stellhebel 104 verbunden. Insbesondere bei einem linearen pneumatischen Aktuator 5 (vgl. Figur 4) kann der Stellhebel 104 auch mehrere Hebelsegmente und/oder Gelenke aufweisen. In der in den Figuren 1a und 1b dargestellten Ausführungsform erstreckt sich der Stellhebel 104 von einer ersten Kupplungsscheibe 106 zu einem Kugellager 108, dass eine Schnittstelle 110 zwischen dem pneumatischen Aktuator 1 und der Kupplung 102 bildet. Die als Kugellager 108 ausgebildete Schnittstelle 110 ermöglicht eine Rotationsbewegung der ersten Kupplungsscheibe 106 relativ zum pneumatischen Aktuator 1. Der pneumatische Aktuator 1 kann so bevorzugt drehfest ausgeführt sein, wodurch eine einfache Befestigung ermöglicht wird.

Eine Rückstellkraft FR der Kupplung 102 drückt die erste Kupplungsscheibe 106 gegen eine zweite Kupplungsscheibe 112. Die Rückstellkraft FR kann beispielsweise durch eine nicht dargestellte Schließfeder auf die Kupplung 102 aufgebracht werden. Durch die Rückstellkraft wird ein erster Reibbelag 114 der ersten Kupplungsscheibe 106 gegen einen zweiten Reibbelag 116 der zweiten Kupplungsscheibe 112 gedrückt, sodass ein Reibschluss zwischen den Reibbelägen 114, 116 bewirkt wird. Hierdurch kann ein Drehmoment M von einer Antriebswelle 118 auf eine Abtriebswelle 120 übertragen werden kann.

Um ein nicht dargestelltes Getriebe, welches mit der Antriebswelle 120 verbunden ist, zu schalten, müssen die Antriebswelle 118 und die Abtriebswelle 120 getrennt werden. Zum Trennen der Wellen 118, 120 bringt der pneumatische Aktuator 1 eine Stellkraft FS auf die erste Kupplungsscheibe 106 auf, die entgegen der Rückstellkraft FR wirkt. Die Stellkraft FS ist betragsmäßig größer als die Rückstellkraft FR, sodass die erste Kupplungsscheibe 106 in Stellrichtung RS bewegt wird. Zum Aufbringen der Stellkraft FS wird ein pneumatischer Kolben 10 des pneumatischen Aktuators 1 entlang einer Stellachse AS des pneumatischen Aktuators in Stellrichtung RS bewegt. Der pneumatische Kolben führt einen Hub H aus. Die Stellrichtung RS des pneumatischen Aktuators 1 kann prinzipiell, beispielsweise durch die Verwendung von Umlenkgestängen zu einer Bewegungsrichtung der ersten Kupplungsscheibe 106 verschieden sein.

Durch das Bewegen der ersten Kupplungsscheibe 106 in Stellrichtung RS werden die Reibbeläge 114, 116 voneinander getrennt, sodass kein Drehmoment M mehr von der Antriebswelle 118 auf die Abtriebswelle 120 übertragen wird. In dem dann lastfreien Zustand kann ein Gang des Getriebes gewechselt werden. Anschließend wird die Stellkraft FS zurückgenommen, sodass die Rückstellkraft FR der Kupplung 102 die erste Kupplungsscheibe 106 entgegen der Stellrichtung RS auf die zweite Kupplungsscheibe 112 zu bewegt.

Wenn nun die Antriebswelle 118 und die Abtriebswelle 120 voneinander verschiedene Drehzahlen aufweisen, müssen diese Drehzahlen aneinander angeglichen werden. Hierfür werden die Reibbeläge 114, 116 in Kontakt gebracht, wobei diese solange relativ zueinander rotieren, bis die Abtriebswelle 120 auf die Drehzahl der Antriebswelle 118 beschleunigt bzw. abgebremst wurde. Die Relativbewegung des ersten Reibbelags 114 zum zweiten Reibbelag 116 wird auch als Schlupf bezeichnet.

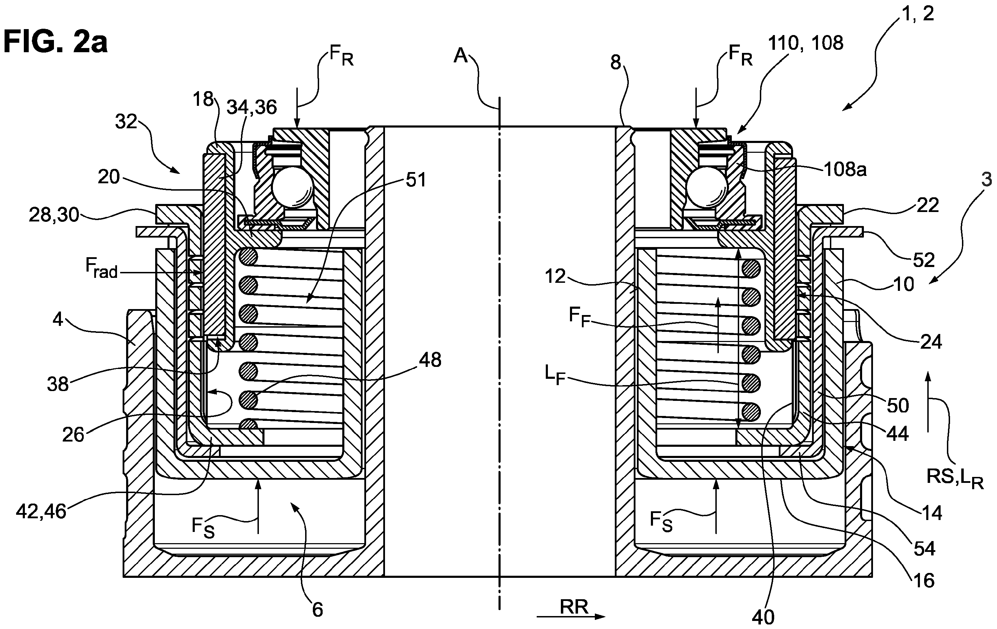

Sobald die Wellen 118, 120 identische Drehzahlen aufweisen, tritt kein Schlupf mehr auf und das Drehmoment M der Antriebswelle 118 wird reibschlüssig von der zweiten Kupplungsscheibe 112 auf die erste Kupplungsscheibe 106 übertragen. Über ihren Lebenszyklus wird die Kupplung 102 vielfach geöffnet und geschlossen, wobei meist verschiedene Drehzahlen von Antriebswelle 118 und Abtriebswelle 120 durch einen Schlupf ausgeglichen werden müssen. Dies führt dazu, dass über die Lebensdauer der Kupplung 102 ein Verschleiß der Reibbeläge 114, 116 auftritt. Durch den Verschleiß der Reibbeläge 114, 116 bewegen sich die Kupplungsscheiben 106, 112 aufeinander zu (in Figur 1a und Figur 1b bewegt sich die erste Kupplungsscheibe 106 nach rechts). Diese Bewegung wird durch die Rückstellkraft FR bewirkt. Um die verschleißbedingte Änderung einer Kupplungslänge LK, gemessen in Stellrichtung RS zwischen den Kupplungsscheiben 106, 112, auszugleichen, ist an dem pneumatischen Aktuator 1 eine Verschleißkompensationseinrichtung 3 vorgesehen, die mit Bezug zu den Figuren 2a bis 2d genauer erläutert wird.

Der Verschleiß der Reibbeläge 114, 116 bewirkt, dass sich die erste Kupplungsscheibe 106 auf den pneumatischen Aktuator 1 zu bewegt, sodass der pneumatische Aktuator 1 in diesem Ausführungsbeispiel zur Verschleißkompensation verkürzt werden muss.

Der Aufbau des pneumatischen Aktuators 1 wird nun mit Bezug zu Figur 2a näher erläutert. Figur 2a zeigt den pneumatischen Aktuator 1 in einem betätigten Zustand. Der pneumatische Aktuator 1 ist also in einem Zustand gezeigt, in dem eine damit verbundene Kupplung 102 geöffnet ist (vergleiche Figur 1b). In diesem Ausführungsbeispiel ist der pneumatische Aktuator 1 als Ringaktuator 2 ausgebildet. Der pneumatische Aktuator 1 weist ein pneumatisches Gehäuse 4 auf, dass einen pneumatischen Zylinder 6 definiert. Ein Führungsschaft 8 des konzentrischen pneumatischen Aktuators 2 ist röhrenförmig ausgebildet, sodass die Antriebswelle 118 in Stellrichtung RS durch den pneumatischen Aktuator 1 hindurchgeführt werden kann.

Ein pneumatischer Kolben 10 ist in dem pneumatischen Zylinder 6 des pneumatischen Gehäuses 4 verschiebbar angeordnet. Der pneumatische Kolben 10 wird durch den Führungsschaft 8 des pneumatischen Gehäuses 4 geführt, sodass dieser in Stellrichtung RS entlang der Stellachse AS verschiebbar ist. Es kann aber auch vorgesehen sein, dass der pneumatische Kolben 10 alternativ oder ergänzend an einem Außenumfang des pneumatischen Kolbens 10 geführt ist (vgl. insbesondere auch Figur 4). Eine äußere Führungsfläche 12 ist zum Führen des pneumatischen Kolbens 10 mit dem Führungsschaft 8 in Kontakt. Es kann vorgesehen sein, dass der pneumatische Kolben 10 Führungsringe (nicht dargestellt) aufweist. Diese Führungsringe können aus besonders verschleißbeständigem und/oder gleitfähigem Material hergestellt sein. Es kann alternativ oder ergänzend auch vorgesehen sein, dass der pneumatische Kolben 10 an einer am äußeren Durchmesser angeordneten zweiten äußeren Führungsfläche 14 geführt ist. Ferner kann der pneumatische Zylinder 6 durch Dichtungen (nicht dargestellt) abgedichtet sein, sodass in den pneumatischen Zylinder 6 eingebrachtes Druckmittel, vorzugsweise Luft, nicht durch zwischen dem pneumatischen Kolben 10 und dem pneumatischen Gehäuse 4 ausgebildete Spalte entweichen kann.

Zum Einbringen von Luft in den pneumatischen Zylinder 6 bzw. das zwischen dem pneumatischen Kolben 10 und dem pneumatischen Gehäuse 4 eingeschlossene Volumen, weist das pneumatische Gehäuse 4 nicht dargestellte Zu- und Abführkanäle auf. Zum Bewegen des pneumatischen Kolbens 10 wird Luft oder ein anderes geeignetes Druckmittel unter Druck in den pneumatischen Zylinder 6 eingebracht, sodass der pneumatische Kolben 10 in Stellrichtung RS entlang der Stellachse AS aus dem pneumatischen Zylinder 6 heraus bewegt wird. Durch Wegnehmen des Drucks bzw. Entlüften des pneumatischen Zylinders 6 kann der pneumatische Kolben 10 entgegen der Stellrichtung RS entlang der Stellachse AS in den pneumatischen Kolben 6 hineinbewegt werden. Der pneumatische Kolben 10 ist im Betrieb durch das Zuführen und Abführen von Druckmittel in den pneumatischen Zylinder 6 hin und her bewegbar.

Die Bewegung des pneumatischen Kolbens 10 wird zumindest teilweise durch die entlang der Stellachse AS auf die Schnittstelle 110 wirkende Rückstellkraft FR bewirkt. Zum Bewegen des pneumatischen Kolbens 10 in Stellrichtung RS übt das Druckmittel die Stellkraft FS auf eine Wirkfläche 16 des pneumatischen Kolbens 10 aus, die hier eine Unterseite des pneumatischen Kolbens 10 ist.

Die als Kugellager 108 ausgebildet Schnittstelle 110 ist auf einem Schnittstellenhalter 18 des pneumatischen Aktuators 1 angeordnet. Vorzugsweise ist ein Außenring 108a des Kugellagers 108 mittels nicht weiter dargestellte Befestigungsmittel an dem Schnittstellenhalter 18 des pneumatischen Aktuators fixiert. Es kann auch vorgesehen sein, dass ein Innenring 108b des Kugellager 108 fix mit dem Schnittstellenhalter 18 verbunden ist und einen Außenring 108a mit der Kupplung 102 verbunden ist. Der Schnittstellenhalter 18 ist in diesem Ausführungsbeispiel zylindrisch ausgebildet und weist einen radial nach innen hervorstehenden Absatz 20 auf, auf dem der äußere Ring 108a des Kugellagers 108 angeordnet ist.

Der Schnittstellenhalter 18 ist teilweise in eine Extensionshülse 22 eingesetzt. In dem in Figur 2a gezeigten betätigten Zustand ist eine Außenfläche 24 des Schnittstellenhalters 18 mit einer Innenfläche 26 der Extensionshülse 22 in Kontakt. Die Extensionshülse 22 bringt über die Innenfläche 26 ein Radialkraft Frad auf die Außenfläche 24 des Schnittstellenhalters 18 auf. Diese Radialkraft Frad bewirkt eine reibschlüssige Verbindung zwischen der Extensionshülse 22 und dem Schnittstellenhalter 24. Ein erstes Ende 28 der Extensionshülse 22 liegt an dem pneumatischen Kolben 10 an, sodass die Stellkraft FS über den pneumatischen Kolben 10, die Extensionshülse 22, die reibschlüssig Verbindung zwischen der Innenfläche 26 und der Außenfläche 24 auf den Schnittstellenhalter 18 und schließlich auf die Schnittstelle 110 übertragen werden kann. Das erste Ende 28 der Extensionshülse 22 ist hier als radial umlaufender Kragen 30 ausgebildet. Die Extensionshülse 22 kann aber auch hakenförmige Vorsprünge oder Nasen zum Anlegen an dem pneumatischen Kolben 10 aufweisen. Ferner kann der pneumatische Kolben 10 auch anderweitig, beispielsweise formschlüssig, mit dem pneumatischen Gehäuse 4 in Kontakt stehen.

Zum Verhindern einer relativen Drehung der Extensionshülse 22 und/oder des Schnittstellenhalters 18 um die Stellachse AS weist der pneumatische Aktuator 1 eine Torsionssicherung 32 auf. In diesem Ausführungsbeispiel weist die Torsionssicherung 32 zwei Sicherungselemente 34 auf, die als Passstifte 36 ausgebildet sind. Die Passstifte 36 sind in korrespondierende Haltenuten 38 des Schnittstellenhalters 18 eingesetzt und greifen formschlüssig in jeweils korrespondierende Sicherungsnuten 40 der Extensionshülse 22 ein. Die Passstifte sind formschlüssig in die Haltenuten 38 und die Sicherungsnuten 40 aufgenommen und verhindern so ein Tordieren der Extensionshülse 22 relativ zum Schnittstellenhalter 18. Zeitgleich sind die Passstifte 36 aber in den Sicherungsnuten 40 verschiebbar, sodass die Torsionssicherung 32 eine Relativbewegung des Schnittstellenhalters 18 zur Extensionshülse in Stellrichtung RS bzw. entgegen der Stellrichtung RS erlaubt.

Die Längsachse AL der Extensionshülse 22 ist in diesem Ausführungsbeispiel identisch zur Stellachse AS. Die Sicherungsnuten 40 erstrecken sich parallel zur Längsachse AL der Extensionshülse 22 in einer Helixregion 45. Die Helixregion 45 ist derjenige Abschnitt der Extensionshülse 22 entlang der Längsachse AL, in dem sich ein Extensionsschlitz 56 erstreckt. Vorzugsweise erstrecken sich die Sicherungsnuten 40 vom ersten Ende 28 bis zu einem zweiten Ende 42 der Extensionshülse 22. Die Sicherungsnuten 40 erstrecken sich also vorzugsweise in Längsrichtung RL der Extensionshülse 22 im Wesentlichen vollständig durch die Helixregion 45, und insbesondere bevorzugt durch die gesamte Extensionshülse 22.

In radialer Richtung RR der Extensionshülse 22, die auch die radiale Richtung RR des pneumatischen Kolbens 10 ist, erstreckt sich die Sicherungsnut 40 nicht vollständig durch die Extensionshülse 22, sondern von der Innenfläche 26 nur abschnittsweise in eine Seitenwand 44 der Extensionshülse 22.

Das zweite Ende 42 der Extensionshülse 22 ist als Bund 46 ausgebildet, sodass die Extensionshülse 22 beidseitig offen ist. Die Extensionshülse 22 kann aber auch einen topfförmigen Querschnitt mit geschlossenem zweiten Ende 42 aufweisen (vgl. Figur 4).

Zwischen dem zweiten Ende 42 der Extensionshülse 22 und dem Absatz 20 des Schnittstellenhalters 18, ist eine Feder 48 angeordnet, die das zweite Ende 42 gegen den Schnittstellenhalter 18 vorspannt. Zum Annähern des Absatz 20 an das zweite Ende 42 muss die Feder 48 zusammengedrückt werden, wozu wiederum eine Kraft aufgewendet werden muss. Im nicht fixierten Zustand, wenn die Extensionshülse 22 und der Schnittstellenhalter 18 nicht oder nicht vollständig reibschlüssig miteinander verbunden sind, kann eine auf die Schnittstelle 110 aufgebrachte Stellkraft FS über den Schnittstellenhalter 18 und die Feder 48 auf das zweite Ende 42 der Extensionshülse 22 aufgebracht werden. Das erste Ende 28 der Extensionshülse 22 liegt an dem pneumatischen Kolben 10 an.

Die Stellkraft FS bewirkt dann eine Dehnung der Extensionshülse 22 in deren Längsrichtung RL, die parallel zur Stellachse AS ist. Aus der Dehnung in Längsrichtung RL resultiert eine Kontraktion der Extensionshülse 22 in radialer Richtung RR, sodass die Innenfläche 26 der Extensionshülse 22 mit der Außenfläche 24 des Schnittstellenhalters 18 in Kontakt kommt und eine Radialkraft Frad von der Extensionshülse 22 auf die Außenfläche 24 des Schnittstellenhalters 18 übertragen wird. Diese Radialkraft Frad bewirkt einen Reibschluss zwischen der Extensionshülse 22 und dem Schnittstellenhalter 18.

Sobald der Reibschluss zwischen dem Schnittstellenhalter 18 und der Extensionshülse 22 besteht, werden auf den pneumatischen Kolben 10 aufgebrachte Stellkräfte FS und auf die Schnittstelle 110 aufgebrachte Rückstellkräfte FR unmittelbar von dem Schnittstellenhalter 18 auf die Extensionshülse 22 übertragen und die Feder 48 entkoppelt, sodass eine Federlänge LF im fixierten Zustand konstant ist.

Ferner weist der pneumatische Aktuator 1 ein Entkopplungselement 50 auf, das in radialer Richtung zwischen dem pneumatischen Kolben 10 und der Extensionshülse 22 angeordnet ist. Ein erstes Entkopplungselement-Ende 52 erstreckt sich durch den pneumatischen Kolben 10 und steht in radialer Richtung von dem pneumatischen Kolben 10 hervor. Das erste Entkopplungselement-Ende 52 ist nicht mit dem pneumatischen Kolben 10 in Kontakt, sodass keine Kräfte von dem ersten Entkopplungselement-Ende 52 auf den pneumatischen Kolben 10 übertragen werden.

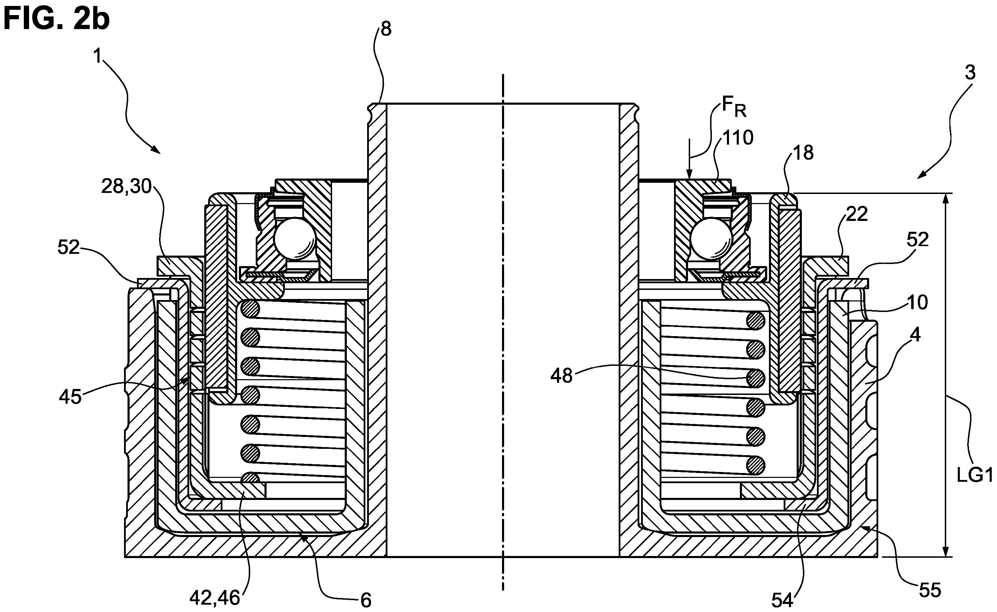

Ein zweites Entkopplungselement-Ende 54 liegt an dem zweiten Ende 42 der Extensionshülse 22 an. In der in Figur 2b gezeigten Endstellung 55 des pneumatischen Kolbens 10 liegt das erste Entkopplungselement-Ende 52 an dem pneumatischen Gehäuse 4 an, sodass Rückstellkräfte FR, die auf die Schnittstelle 110 aufgebracht werden, über den Schnittstellenhalter 18, die Feder 48, die Extensionshülse 22 und das Entkopplungselement-Ende 52 auf das Gehäuse 4 übertragen werden können. Das Entkopplungselement 50 ist in der Endstellung 55 weder mit dem Boden 16 des pneumatischen Zylinders 10 noch mit demjenigen Abschnitt des pneumatischen Zylinders 10, an dem das erste Ende 28 der Extensionshülse 22 anliegt, in Kontakt. Der pneumatische Kolben 10 wird durch das Entkopplungselement 50 entkoppelt, sodass keine Rückstellkraft FR auf den pneumatischen Kolben 10 wirkt. Vielmehr wird die Rückstellkraft FR über das Entkopplungselement 50 an dem pneumatischen Kolben 10 vorbei geleitet. Der Kolben 10 überträgt keine Kraft auf die Schnittstelle 110. Es wird aber vorzugsweise weiterhin durch die Feder 48 eine Kraft auf die Schnittstelle 110 übertragen. Die von der Feder 48 übertragene Kraft FF ist der Rückstellkraft FR entgegengesetzt und in der Endstellung 55 (und nach dem Verschleißausgleich) mit der Rückstellkraft FR im Gleichgewicht. Vorzugsweise ist die Feder 48 derart vorgespannt, dass eine Federrate der Feder 48 im Wesentlichen unabhängig von deren Länge LF ist. So kann trotz Längenausgleich der Verschleißkompensationseinrichtung 3 eine im Wesentlichen konstante Federkraft FF bereitgestellt werden. Da der pneumatische Kolben 10 entkoppelt ist, wird auch keine Kraft von dem ersten Ende 28 der Extensionshülse 22 auf den pneumatischen Kolben 10 bzw. von dem pneumatischen Kolben 10 auf das erste Ende 28 übertragen. Es wirkt daher auch keine Längskraft FL entlang der Stellachse AS auf die Extensionshülse 22. Zwar stützt sich die Feder 48 auf der Extensionshülse 22 ab, die Kraft wird aber über das zweite Ende 42 unmittelbar auf das Entkopplungselement 50 übertragen. Die Extensionshülse 22 erzeugt keinen (vollständigen) Reibschluss und der Schnittstellenhalter 18 ist relativ zur Extensionshülse 22 bewegbar.

In diesem Ausführungsbeispiel weist der pneumatische Kolben 10 einen u-förmigen Querschnitt auf. Die Verschleißkompensationseinrichtung 3, ist in einem von dem u-förmigen Querschnitt definierten inneren Aufnahmeraum 51 angeordnet, und steht in Stellrichtung RS aus diesem inneren Aufnahmeraum 51 hervor. Die u-Form erlaubt große Führungsflächen 14 des pneumatischen Kolbens 10, um eine exakte und spielfreie Führung des pneumatischen Zylinders entlang der Stellachse AS zu ermöglichen. (Trotz großer Führungsflächen 14 wird durch das Anordnen der Verschleißkompensationseinrichtung 3 in dem inneren Aufnahmeraum 51 eine kompakte Bauweise erzielt.

Die Figuren 2a und 2b zeigen den pneumatischen Aktuator 1 in einem Zustand mit maximaler Länge entlang der Stellachse AS. Dieser Zustand des pneumatischen Aktuators 1 ergibt sich, wenn die die Reibbeläge 114, 116 der Kupplung 102 in einem Neuzustand sind. Wie vorstehend erläutert, kann der pneumatische Kolben 10 durch Einbringen eines Druckmittels in den pneumatischen Zylinder 6 in Stellrichtung RS gegen die Rückstellkraft FR bewegt werden.

Sobald Druckmittel mit einem Druck in den pneumatischen Zylinder 6 eingebracht wird, der größer ist als ein Umgebungsdruck, wirkt die Stellkraft FS auf die Wirkfläche 16 des pneumatischen Kolbens 8. Wenn die Stellkraft FS größer ist als die Rückstellkraft, bewegt sich der pneumatische Kolben 10 in Stellrichtung RS (in Figur 2a nach oben).

Die auf die Wirkfläche 16 des pneumatischen Zylinders 10 wirkende Stellkraft FS wird auf das an dem pneumatischen Kolben 10 anliegende erste Ende 28 der Extensionshülse 22 übertragen. Die auf die Schnittstelle 110 wirkende Rückstellkraft FR wird von der Schnittstelle 110 auf den Schnittstellenhalter 20 übertragen. Im initialen Bewegungszustand (im Moment des Einleitens von Druckluft in den pneumatischen Zylinder 6) sind der pneumatische Kolben 10 und der Schnittstellenhalter 18 noch nicht mittels der Extensionshülse 22 reibschlüssig fixiert. Es soll verstanden sein, dass die Extensionshülse 22 bereits radial an dem Schnittstellenhalter 18 anliegen kann, ohne einen (vollständigen) Reibschluss zu erzeugen. Beispielsweise kann der Spalt bereits geschlossen sein, während die Radialkraft noch zu klein ist, um einen Reibschluss zu erzeugen. In diesem nicht fixierten Zustand, wenn kein Reibschluss zwischen der Extensionshülse 22 und dem Schnittstellenhalter 18 besteht, kann die Rückstellkraft FR nicht mittels der Flächen 24,26 auf die Extensionshülse 22 übertragen werden. Die Rückstellkraft FR wird in diesem Fall von dem Schnittstellenhalter 18 mittels der Feder 48 auf das zweite Ende 42 der Extensionshülse 22 aufgebracht.

Auf die Enden 28 und 42 der Extensionshülse 22 wirken dann einander entgegengesetzte Kräfte. Auf das erste Ende 28 der Extensionshülse 22 wirkt die Stellkraft FS, während auf das zweite Ende 42 die entgegengesetzt zur Stellkraft FS gerichtete Rückstellkraft FR wirkt. Durch die in entgegengesetzter Richtung angreifenden Kräfte FR, FS wird die Extensionshülse 22 in Ihrer Längsrichtung RL, die hier parallel zur Stellachse AS ist, gedehnt. Die Dehnung der Extensionshülse 22 führt zur Kontraktion der Extensionshülse 22 in radialer Richtung RR. Ein Innendurchmesser DI der Extensionshülse 22 wird verringert, sodass die Innenfläche 26 der Extensionshülse 22 mit der Außenfläche 24 des Schnittstellenhalters 18 in sicheren Kontakt kommt. Beim Kontakt der Flächen 24, 26 überträgt die Extensionshülse 22 die Radialkraft Frad auf den Schnittstellenhalter 18, da dieser eine weiter Kontraktion der Extensionshülse 22 im Wesentlichen verhindert. Hierdurch wird unmittelbar nach dem Einbringen des Druckmittels in den pneumatischen Zylinder 6 der Reibschluss zwischen der Extensionshülse 22 und dem Schnittstellenhalter 18 bewirkt. Die auf den pneumatischen Zylinder 10 wirkende Stellkraft FS kann nun über die Flächen 26, 24 auf den Schnittstellenhalter 22 und die Schnittstelle 110 übertragen werden. Wenn die Stellkraft FS betragsmäßig größer ist als die ihr entgegenwirkende Rückstellkraft FR, wird der pneumatische Kolben 10 in Stellrichtung RS aus dem pneumatischen Zylinder 6 heraus bewegt.

Auch wenn die Extensionshülse 22 und der Schnittstellenhalter 18 Reibschlüssig miteinander verbunden sind, werden weiterhin entlang der Stellachse AS wirkende Kräfte FS, FR von der Extensionshülse 22 übertragen. Die Radialkraft Frad ist lediglich eine resultierende Kraft, die immer dann von der Extensionshülse 22 erzeugt wird, wenn die Extensionshülse 22 aufgrund angreifender Kräfte FS, FR in ihrer Längsrichtung RL gedehnt wird.

Die Rückstellkraft FR kann während der Bewegung des pneumatischen Kolben 10 Stellrichtung RS ansteigen. Dies ist beispielsweise dann der Fall, wenn die Rückstellkraft FR durch eine Schließfeder der Kupplung 102 bereitgestellt wird. Mit steigender Rückstellkraft FR muss zum weiteren Bewegen des pneumatischen Kolbens 10 auch die Stellkraft SF ansteigen. Eine Belastung der Extensionshülse 22 entlang der Stellachse AS steigt, sodass diese weiter in Längsrichtung RL gedehnt wird. Die von der Extensionshülse 22 erzeugte Radialkraft Frad ist proportional zur in Längsrichtung RL auf die Extensionshülse angreifenden Kraft, sodass aus der erhöhten Belastung in Längsrichtung RL auch eine höhere Radialkraft Frad der Extensionshülse 22 resultiert. Die Radialkraft Frad skaliert also mit der Stellkraft FS. Je höher die Stellkraft FS ist, desto höher ist auch die von der Extensionshülse 22 auf den Schnittstellenhalter 18 aufgebrachte Radialkraft FR. Der Reibschluss zwischen der Extensionshülse 22 und dem Schnittstellenhalter wird umso stärker, je höher die Kräfte FS, FR sind, die in Stellrichtung RS bzw. entlang der Stellachse AS übertragen werden sollen. Auch beim Übertragen hoher Stellkräfte FS kann so ein sicherer Reibschluss zwischen der Extensionshülse 22 und dem Schnittstellenhalter 18 sichergestellt und ein relatives Gleiten des Schnittstellenhalters 18 zur Extensionshülse 22 verhindert werden.

Wenn die Kupplung 102 wieder geschlossen werden soll, wird der Druck in dem pneumatischen Zylinder 6 reduziert, sodass die auf den pneumatischen Kolben 10 wirkende Stellkraft SF kleiner wird als die Rückstellkraft FR. In diesem Fall bewegt die Rückstellkraft SR den pneumatischen Kolben 10 entgegen der Stellrichtung RS in den pneumatischen Zylinder 6 hinein. Die Bewegung des pneumatischen Kolbens 10 entgegen der Stellrichtung RS erfolgt so lange, bis keine Rückstellkraft FR mehr auf die Schnittstelle 110 aufgebracht wird, oder bis der pneumatische Kolben 10 in der Endstellung 55 ist, die in Figur 2b gezeigt ist. Wie vorstehend erläutert, wird in der Endstellung 55 die Rückstellkraft FR über das Entkopplungselement 52 unmittelbar auf das pneumatische Gehäuse 4 übertragen, sodass der pneumatische Kolben 10 entkoppelt wird.

Der Fall, dass auch in der Endstellung 55 des pneumatischen Kolbens 10 eine Rückstellkraft FR auf die Schnittstelle 110 aufgebracht wird, liegt in der Regel dann vor, wenn die Kupplungslänge LK der Kupplung 102 aufgrund eines Verschleißes der Reibbeläge 114, 116 der Kupplungsscheiben 106, 112 reduziert ist. Die erste Kupplungsscheibe 106 kann sich der zweiten Kupplungsscheibe 112 weiter annähern als in einem Neuzustand. Die Rückstellkraft FR, die zum Schließen der Kupplung 102 vorgesehen ist und mittels des Stellhebels 104 auf die Schnittstelle 110 übertragen wird, wirkt über einen längeren Weg der Schnittstelle 110 entgegen der Stellrichtung RS, da die Rückstellkraft FR erst zu einem späteren Zeitpunkt über die Kupplungsscheiben 106, 112 abgestützt wird.

Ein Verschleiß der Reibbeläge 114, 116 der Kupplung 102 führt so dazu, dass auch dann eine Rückstellkraft FR auf die Schnittstelle 110 wirkt, wenn der pneumatische Zylinder 10 in der Endstellung 55 ist. In der Endstellung 55 liegt das zweite Ende 42 der Extensionshülse 22 an dem zweiten Entkopplungselement-Ende 54 des Entkopplungselement 52 an. Aufgrund der Entkoppelung des pneumatischen Zylinders 10 wirkt keine Längskraft FL in Längsrichtung RL auf die Extensionshülse 22 und der Reibschluss zwischen der Extensionshülse 22 und dem Schnittstellenhalter 18 wird gelöst. Beim Entfallen der Längskraft FL auf die Extensionshülse 22 zieht sich diese in Längsrichtung LR zusammen, sodass deren Innendurchmesser DI aufgeweitet wird.

Die Rückstellkraft SR wird in der Endstellung 55 von der Schnittstelle 110 über den Schnittstellenhalter 18 bzw. dessen Absatz 20, die Feder 48, das zweite Ende 42 der Extensionshülse 22, das zweite Entkopplungselement-Ende 54 und das erste Entkopplungselement-Ende 52 auf das Gehäuse 4 übertragen. Die Feder 48 wird ausgehend von dem in den Figuren 2a und 2b gezeigten entspannten Zustand entlang der Stellachse AS gestaucht, sodass deren Federlänge LF reduziert wird. Die Feder 48 setzt diesem Stauchen eine Federkraft FF entgegen. Die Feder 48 wird so lange gestaucht, bis die resultierende Federkraft FF mit der Rückstellkraft FR im Gleichgewicht ist.

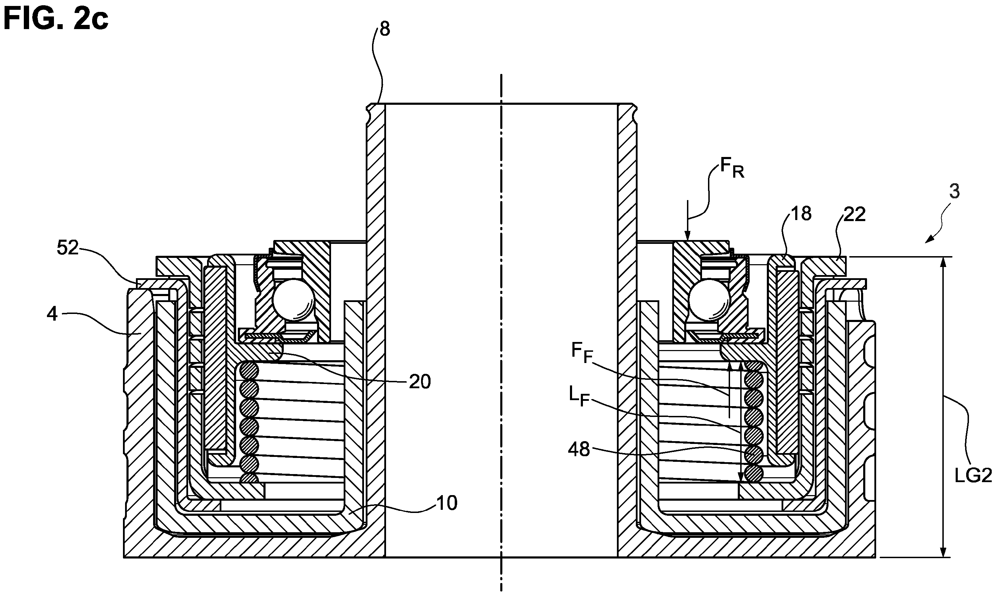

Durch das Stauchen der Feder 48 wird die Federlänge LF verkürzt und der Schnittstellenhalter 18 entgegen der Stellrichtung RS in den inneren Aufnahmeraum 51 des pneumatischen Kolbens 10 hineinbewegt. Hierbei wird der Schnittstellenhalter 18 entlang der Stellachse AS relativ zur Extensionshülse 22 bewegt. Eine Gesamtlänge LG des pneumatischen Aktuators 1 wird verkürzt. So ist eine Gesamtlänge LG1 des pneumatischen Aktuators 1 in dem in Figur 2b gezeigten Ausgangszustand größer als eine Gesamtlänge LG2 des pneumatischen Aktuators 1 in dem in Figur 2c gezeigten verschleißkompensierten Zustand. Die Feder 48 hat eine möglichst niedrige Federrate und ist so vorgespannt, dass über den gesamten Kupplungsverschleißweg eine möglichst gleichbleibende Federkraft FF, von vorzugsweise etwa 300N, bereitgestellt wird. Dies ist insbesondere vorteilhaft, da eine Membranfeder der Kupplung 102, die die Kupplungsscheiben 106, 112 gegeneinander vorspannt, derart dominant (steif) ist, dass sich der Verschleiß immer an der Feder 48 des pneumatischen Aktuators einstellt. Durch die niedrige Federrate stellt die Feder über den gesamten Stellbereich der Verschleißkompensationseinrichtung 3 eine im Wesentlichen konstante Federkraft FF bereit.

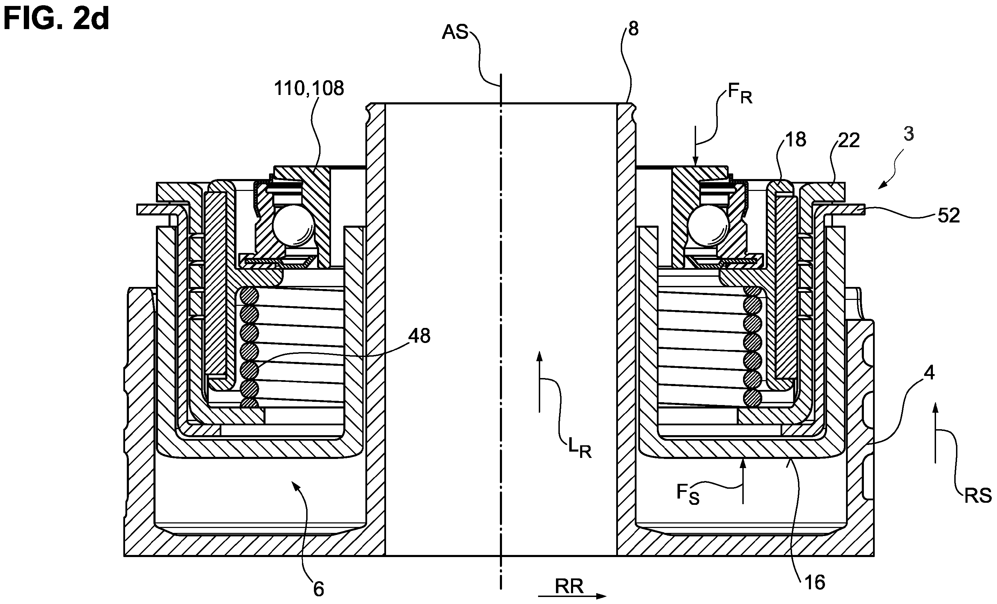

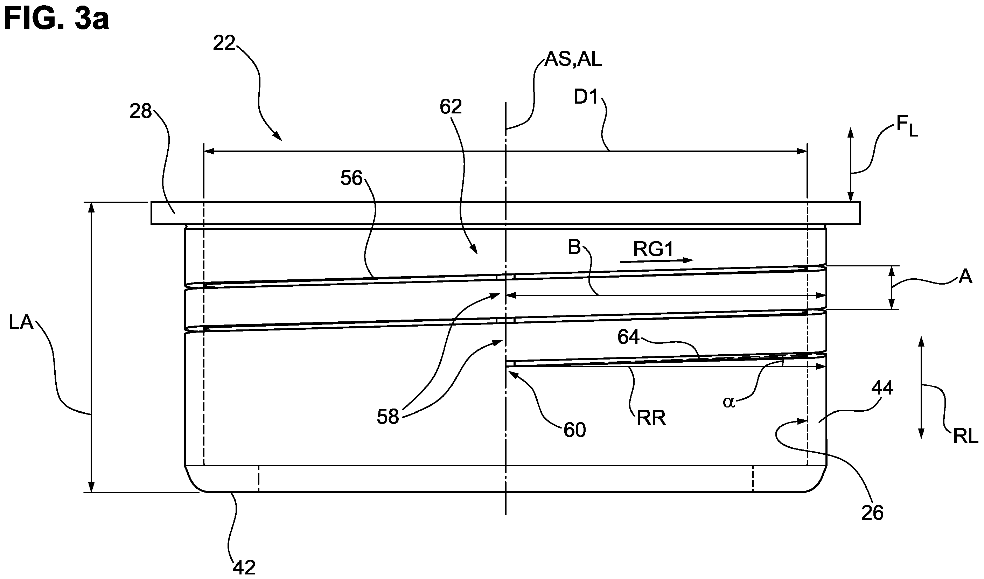

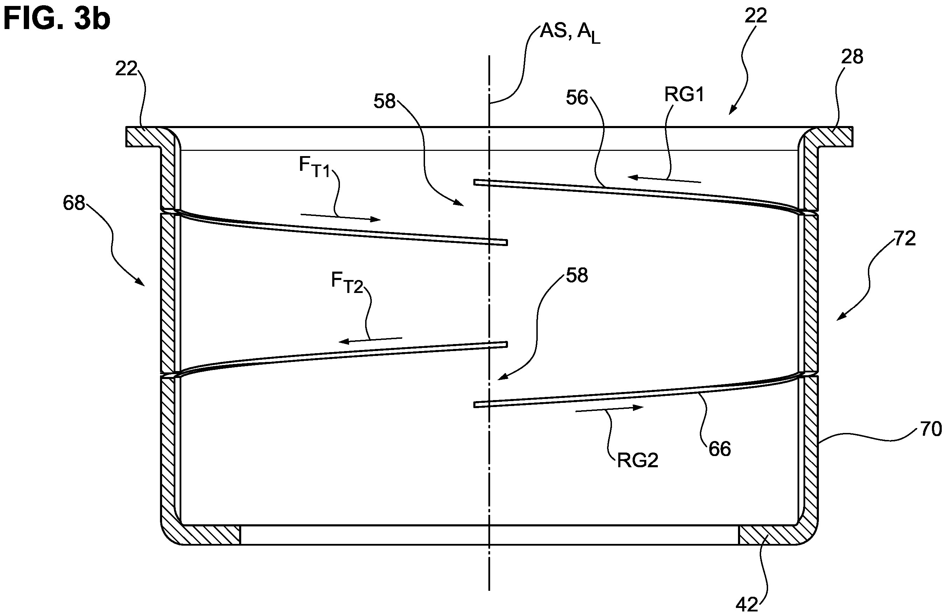

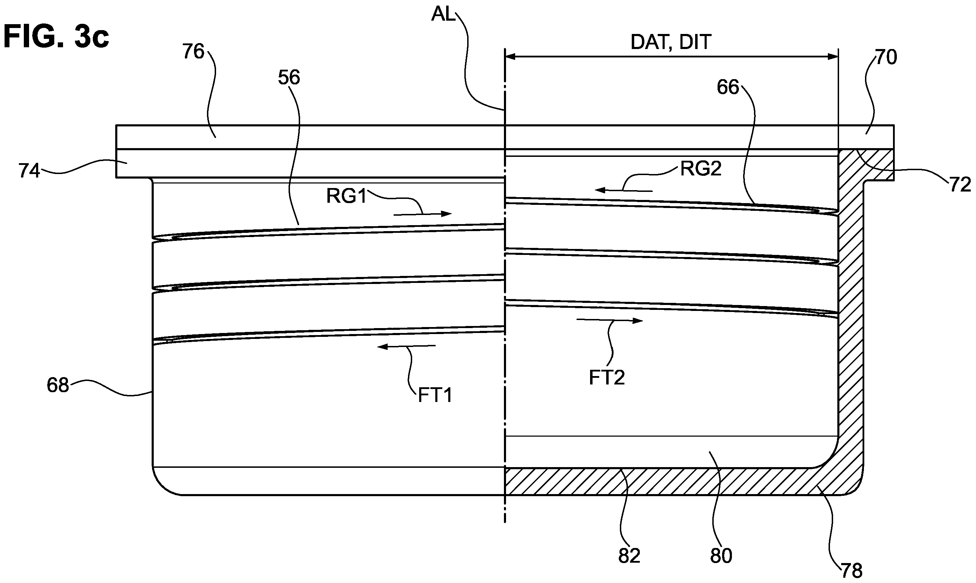

Wenn der pneumatische Aktuator 1 erneut durch Einbringen von Druckluft bzw. Druckmittel in dem pneumatischen Zylinder 6 betätigt wird, wird der Reibschluss zwischen der Extensionshülse 22 und dem Schnittstellenhalter 18 wiederhergestellt und die Feder 48 am Entspannen gehindert. Der pneumatische Kolben 10 wird so beim erneuten Betätigen mitsamt gestauchter Feder 48 bzw. in die Extensionshülse 22 eingeschobenem Schnittstellenhalter 18 in Stellrichtung RS bewegt. Die Figuren 2c und 2d zeigen die Verschleißkompensationseinrichtung 3 des pneumatischen Aktuator 1 bei maximaler Verschleißkompensation. Der Schnittstellenhalter 18 ist vollständig in die Extensionshülse 22 eingeschoben. Die Feder 48 ist maximal gestaucht, sodass deren Federlänge FL in im Vergleich zur den Figuren 2a und 2b deutlich verkürzt ist. Figur 2d zeigt den pneumatischen Aktuator 1 mit maximal gestauchter Verschleißkompensationseinrichtung 3 im betätigten Zustand, in dem der pneumatische Zylinder 6 mit Druckmittel gefüllt ist. Aufgrund des beim Einbringen des Druckmittels in den pneumatischen Zylinder 6 hervorgerufenen Reibschlusses zwischen der Extensionshülse 22 dem Schnittstellenhalter 18 wird die Feder 48 nicht entlastet und der verschleißkompensierte Zustand wird beibehalten. Der Verschleiß der Reibbeläge 114, 116 wird durch Verschieben des Schnittstellenhalters 18 relativ zur Extensionshülse 22 kompensiert. In analoger Weise kann durch die Verschleißkompensationseinrichtung 3 auch ein Nachstellen entgegen einer Verschleißrichtung erreicht werden. Wenn beispielsweise eine neue Kupplung 102 eingesetzt wird, kann der pneumatische Aktuator 1 von dem in den Figuren 3c und 3d dargestellten verschleißkompensierten Zustand in den Ausganszustand gemäß der Figuren 3a und 3b zurückkehren. So wird nach dem Einbau einer neuen Kupplung 102 die Rückstellkraft FR früher über die Kupplungsscheiben 106, 112 abgestützt. Die Feder 48 längt sich entsprechend, bis die Federkraft FF mit der Rückstellkraft FR im Gleichgewicht ist.

Die Figuren 3a, 3b und 3c zeigen Querschnitte durch drei alternative Ausführungsbeispiele der Extensionshülse 22. In beiden Varianten weist die Extensionshülse 22 das erste Ende 28 und das zweite Ende 42 auf, das dem ersten Ende 28 in Längsrichtung LR der Extensionshülse 22 gegenüberliegt. Die Längsrichtung LR verläuft entlang der Längsachse AL der Extensionshülse 22, die im eingebauten Zustand parallel zur Stellachse AS ist. Zwischen den Enden 28, 42 erstreckt sich die Seitenwand 44 der Extensionshülse 22.

Die Extensionshülse 22 weist einen ersten Extensionsschlitz 56 auf, der sich in einer ersten Gangrichtung G1 helixförmig um die Stellachse AS erstreckt (Figur 3a). In diesem Ausführungsbeispiel ist der erste Extensionsschlitz 56 rechtsgängig. In der radialen Richtung RR erstreckt sich der Extensionsschlitz 56 vollständig durch die Seitenwand 44 der Extensionshülse 22.

Der erste Extensionsschlitz 56 weist etwa zweieinhalb vollständige Windungen 58 auf. Eine vollständige Windung 58 erstreckt sich in Umfangsrichtung einmal vollständig (in einer ebenen Projektion entlang der Längsachse AL um 360°) in der Seitenwand 44. Da die gezeigte Variante zweieinhalb vollständige Windungen 58 aufweist, sind ein erstes Schlitzende 60 des Extensionsschlitzes 56 und ein zweites Schlitzende 62 (durch Seitenwand 44 verdeckt) des ersten Extensionsschlitzes 56 in Längsrichtung LR zueinander und in Umfangsrichtung (etwa 180°) versetzt. Der erste Extensionsschlitz 56 erstreckt sich zweieinhalbmal vollständig in Umfangsrichtung (d.h. um 900°) durch die Seitenwand 44 der Extensionshülse 22. In der Längsrichtung RL der Extensionshülse 22 erstreckt sich der Extensionsschlitz in diesem Ausführungsbeispiel über etwa 45% einer axialen Länge der Extensionshülse 22, gemessen in Längsrichtung RL zwischen dem ersten Schlitzende 60 und dem zweiten Schlitzende 62.

Ein Steigungswinkel $\alpha$ des ersten Extensionsschlitzes 56 weist in diesem Ausführungsbeispiel einen Wert von etwa 5° auf. Der Steigungswinkel $\alpha$ wird zwischen der radialen Richtung RR und einer zentralen Schlitzachse 64 des ersten Extensionsschlitzes 56 ermittelt. Die Windungszahl N der Windungen 58 des ersten Extensionsschlitzes 56 und der Steigungswinkel $\alpha$ bestimmen die von der Extensionshülse 22 erzeugbare Radialkraft Frad. Der Steigungswinkel $\alpha$ kann über trigonometrische Beziehungen in ein Steigungsverhältnis des Extensionsschlitzes 56 umgerechnet werden. Das Steigungsverhältnis (B/A) entspricht dem Verhältnis der Erstreckung des Extensionsschlitzes (B) in radialer Richtung RR zur Erstreckung (A) in Längsrichtung RL und ist in Figur 3a verdeutlicht. Das Steigungsverhältnis (B/A) kann durch trigonometrische Beziehungen aus dem Steigungswinkel $\alpha$ bestimmt werden. Durch Aufbringen der Längskraft FL wird eine zum ersten Extensionsschlitz 56 tangential orientierte Tangentialkraft FT erzeugt, die dem Produkt aus der axialen Längskraft FL und dem Steigungsverhältnis (B/A) entspricht. Die Tangentialkraft FT erzeugt durch die radiale Umschlingung der Extensionshülse 22 die Radialkraft FR. Die Radialkraft ist direkt proportional zur Tangentialkraft FT und der Windungszahl N. Die zwischen der Extensionshülse 22 und dem Schnittstellenhalter 18 erzeugte Reibkraft Freib entspricht dem Produkt aus der Radialkraft FR und einem durch die Materialien der Extensionshülse 22 und des Schnittstellenhalters bestimmten Reibkoeffizienten $\mu$. Die nachstehenden Formeln [1] bis [4] verdeutlichen den Zusammenhang im Wesentlichen:

$$[1] \quad FT = FL * \left(\frac{B}{A}\right)$$

$$[2] \quad FR = FT * 2\,\pi * N$$

$$[03] \quad Freib = FR * \mu$$

$$[04] \quad Freib > FL,\ vorzugsweise\ Freib \gg FL\ (Reibschlussbedingung)$$

Die Radialkraft FR kann durch geeignete Wahl des Steigungswinkels $\alpha$ und der Windungszahl N bestimmt werden. Zum Erzielen eines Reibschlusses muss die Reibkraft Freib größer sein als die Längskraft FL (Formel [04]). Es soll verstanden werden, dass die Gleichungen den realen Zusammenhang nur vereinfacht wiedergeben. So skaliert die Radialkraft FR beispielsweise unter Umständen nur Näherungsweise mit der Windungszahl N.

Figur 3b zeigt eine alternative Ausgestaltung der Extensionshülse 22. In dieser Variante weist die Extensionshülse 22 neben dem ersten Extensionsschlitz 56 einen zweiten Extensionsschlitz 66 auf. Eine zweite Gangrichtung RG2 des zweiten Extensionsschlitzes 66 ist entgegengesetzt zur ersten Gangrichtung RG1 des ersten Extensionsschlitzes 56 orientiert. In diesem Ausführungsbeispiel ist der erste Extensionsschlitz 56 rechtsgängig und der zweite Extensionsschlitz 66 linksgängig. Sowohl der erste Extensionsschlitz 56 als auch der zweite Extensionsschlitz 66 weisen je ein vollständige Windung 58 auf. Der erste Extensionsschlitz 56 ist in einer ersten Teilhülse 68 der Extensionshülse 22 angeordnet, während sich der zweite Extensionsschlitz 66 in einer zweiten Teilhülse 70 erstreckt. Die Teilhülsen 68, 70 sind in einem Verbindungsbereich 72 stoffschlüssig miteinander verbunden. Die Teilhülsen 68, 70 könnten aber auch beispielsweise mittels Schrauben und/oder Nieten in einem überlappend ausgebildeten Verbindungsbereich 72 verbunden sein. Das erste Ende 28 der Extensionshülse 22 ist an der ersten Teilhülse 68 angeordnet, während das zweite Ende 42 der Extensionshülse 22 an der zweiten Teilhülse 70 angeordnet ist.

Wie vorstehend erläutert, bewirkt das Aufbringen einer Längskraft FL eine Tangentialkraft FT die parallel zu den Extensionsschlitzen 56, 66 orientiert ist. Eine erste Tangentialkraft FT1, die von dem ersten Extensionsschlitz 56 erzeugt wird, weist eine Komponente entlang der Längsachse AL und eine Komponente in Umfangsrichtung auf. Analog weist auch eine zweite Tangentialkraft FT2 des zweiten Extensionsschlitzes 66 eine Komponente entlang der Längsachse AL und eine Umfangskomponente auf.

Figur 3c zeigt eine dritte Ausführungsform der Extensionshülse 22, die ebenfalls zwei Teilhülsen 68, 70 aufweist. Die linke Hälfte von Figur 3c zeigt die erste Teilhülse 68 und die rechte Hälfte von Figur 3c zeigt die zweite Teilhülse 70. Die zweite Teilhülse 70 weist einen geringeren Durchmesser auf und ist konzentrisch zur ersten Teilhülse 68 in die erste Teilhülse 68 eingesetzt. Ein Außendurchmesser DAT der zweiten Teilhülse 70 entspricht im Wesentlichen einem Innendurchmesser DIT der ersten Teilhülse 68. Verdeutlicht durch die Linie 72 sind ein erstes Ende 74 der ersten Teilhülse 68 und ein erstes Ende 76 der zweiten Teilhülse 70 stoffschlüssig verbunden. Entlang der Längsachse AL gegenüber des ersten Endes 74 weist die erste Teilhülse 68 ein zweites Ende 78 auf. Analog weist auch die zweite Teilhülse 70 ein zweites Ende 80 auf. Eine zweite Linie 82 verdeutlicht, dass auch die zweiten Enden 78, 80 der Teilhülsen 68, 70 stoffschlüssig verbunden sind. Seitenwände 44a, 44b der Teilhülsen 68, 70 sind in Kontakt, aber nicht stoffschlüssig verbunden.

In der Anordnung gemäß Figur 3a würde die Umfangskomponente der Tangentialkraft FT eine Torsion der Extensionshülse 22 in der Helixregion 45 bewirken, wenn die Extensionshülse 22 nicht an dieser Rotationsbewegung gehindert wird. Wie vorstehend erläutert, kann die Rotationsbewegung durch den Passstift 36, der in die Sicherungsnut 40 formschlüssig eingreift, verhindert werden.

In der Ausführungsform gemäß Figur 3c, die zwei Extensionsschlitze 56, 66 aufweist, kann die Torsionssicherung 32 aber auch vollständig oder teilweise durch die Extensionsschlitze 56, 66 gebildet sein. Die Extensionsschlitze 56, 66 sind im Wesentlichen identisch ausgebildet und unterscheiden sich voneinander nur durch die entgegengesetzten Gangrichtungen RG1, RG2. Während die in Längsrichtung wirkenden Komponenten der Tangentialkräfte FT1, FT2 in dieselbe Richtung orientiert sind, weisend die Umfangskomponenten der Tangentialkräfte FT1, FT2 einander entgegen. Aufgrund der im Wesentlichen identischen Ausgestaltung der Extensionsschlitze 56, 66 sind die Tangentialkräfte FT1, FT2 betragsmäßig gleich, sodass sich die Umfangskomponenten gegenseitig aufheben. Die gegenläufig orientierten Extensionsschlitze 56, 66 bilden so die Torsionssicherung 32.

Es soll verstanden werden, dass die Extensionsschlitze 56, 66 zum Bilden der Torsionssicherung 32 nicht im Wesentlichen identisch ausgebildet sein müssen. So kann auch eine teilweise Torsionssicherung 32 bzw. eine teilweise Kompensation der Umfangskomponente der Tangentialkraft FT ausreichend sein. Beispielsweise kann ergänzend zu den Extensionsschlitzen 56, 66 mit entgegengesetzten Gangrichtungen RG1, RG2 der Passstift 36 vorgesehen sein.

Figur 4 zeigt eine Kupplungsanordnung 100 mit linearem Aktuator 5, der nicht konzentrisch zur Kupplung 102, sondern seitlich versetzt zur Kupplung 102 angeordnet ist. Der lineare Aktuator 5 weist einen pneumatischen Kolben 10 auf, der an zweiten äußeren Führungsflächen 14 in dem pneumatischen Gehäuse 4 geführt ist. Der pneumatische Kolben 10 ist hier jedoch nicht ringförmig, sondern im Wesentlichen topfförmig ausgebildet. Die Extensionshülse 22 ist ebenfalls topfförmig (d.h. in Figur 4 unten geschlossen), da hier keine Welle 118, 120 durch den linearen Aktuator 5 geführt wird. Es könnte aber auch eine beidseitig offene Extensionshülse 22 vorgesehen sein. Im Übrigen ist der lineare pneumatische Aktuator 5 im Wesentlichen analog zum konzentrischen Ringaktuator 2 gemäß den Figuren 1 und 2 ausgebildet, wobei die Funktionsweise ebenfalls im Wesentlichen dieselbe ist. Die auf dem Schnittstellenhalter 18 angeordnete Schnittstelle 110 ist gemäß Figur 4 jedoch kein Kugellager 108, sondern weist eine napfförmige Vertiefung 122 auf, in die der Stellhebel 104 eingreift. Der Stellhebel 104 wird durch gelenkig verbundene Hebelsegmente 124 gebildet. Ein Hub des pneumatischen Kolbens 10 wird über den Schnittstellenhalter 18, die Schnittstelle 110 und den Stellhebel 104 auf die Kupplung 102 bzw. deren erste Kupplungsscheibe 106 übertragen. Die napfförmige Vertiefung 122 ermöglicht dabei ein Verkippen des Hebelsegments 124a, das in die Schnittstelle 110 eingreift. Die Rückstellkraft FR wird hier mittels einer Rückstellfeder 126 bereitgestellt und durch den Stellhebel 104 auf die Schnittstelle 110 übertragen. Zum Öffnen der Kupplung 102 wird (wie in Figur 4 dargestellt) Druckmittel in den pneumatischen Zylinder 6 eingebracht und der pneumatische Kolben 10 auf diese Weise nach oben bewegt. Die Extensionshülse 22 wird in Längsrichtung belastet und stellt einen Reibschluss zwischen der Extensionshülse 22 und dem Schnittstellenhalter 18 her. Die Stellkraft FS kann so unmittelbar über den pneumatischen Kolben 10, die Extensionshülse 22, den Schnittstellenhalter 18, die Schnittstelle 110 und den Stellhebel 104 auf die Kupplung 102 übertragen werden.

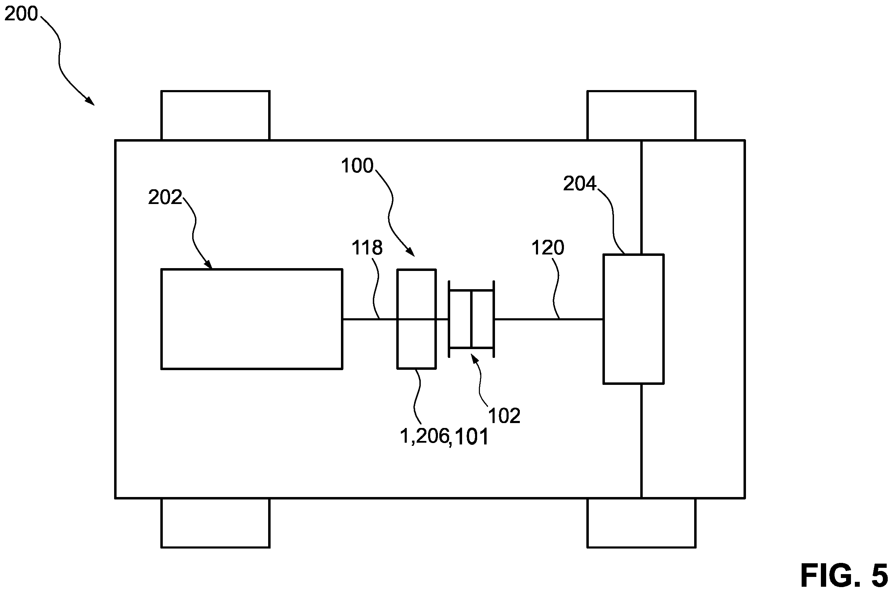

Figur 5 zeigt ein Nutzfahrzeug 200 mit einem Motor 202, einer Kupplungsanordnung 100 und einem Getriebe 204. Der Motor 202 ist mit der Antriebswelle 118 verbunden und das Getriebe 204 ist mit der Abtriebswelle 120 verbunden. Ein vom Motor 202 bereitgestelltes Drehmoment M kann mittels der Kupplung 102 von der Antriebswelle 118 auf die Abtriebswelle 118 übertragen werden. Der pneumatische Aktuator 1 ist ein pneumatischer Kupplungs-Aktuator 206 und zum Öffnen der Kupplung 102 vorgesehen, um so einen Gangwechsel am Getriebe 204 zu ermöglichen. Die Abtriebswelle 118 erstreckt sich durch den pneumatischen Aktuator 1, sodass eine bevorzugte In-line-Anordnung realisiert wird. Durch die In-line-Anordnung von pneumatischem Aktuator 1 und Kupplung 102 kann auf komplexe und störungsanfällige Umlenkgestänge verzichtet werden.

Bezugszeichenliste (Teil der Beschreibung)

| | |
|---|---|
| 1 | pneumatischer Aktuator |
| 2 | Ringaktuator |
| 3 | Verschleißkompensationseinrichtung |
| 4 | pneumatisches Gehäuse |
| 5 | linearer Aktuator |
| 6 | pneumatischer Zylinder |
| 8 | Führungsschaft |
| 10 | pneumatischer Kolben |
| 12 | äußere Führungsfläche |
| 14 | zweite äußere Führungsfläche |
| 16 | Wirkfläche |
| 18 | Schnittstellenhalter |
| 20 | Absatz |
| 22 | Extensionshülse |
| 24 | Außenfläche |
| 26 | Innenfläche |
| 28 | erstes Ende |
| 30 | Kragen |
| 32 | Torsionssicherung |
| 34 | Sicherungselement |
| 36 | Passstift |
| 38 | Haltenut |
| 40 | Sicherungsnut |
| 42 | zweites Ende |
| 44, 44a, 44b | Seitenwand |
| 45 | Helixregion |
| 46 | Bund |

| | |
|---|---|
| 48 | Feder |
| 50 | Entkopplungselement |
| 51 | innerer Aufnahmeraum |
| 52 | erstes Entkopplungselement-Ende |
| 54 | zweites Entkopplungselement-Ende |
| 55 | Endstellung |
| 56 | erster Extensionsschlitz |
| 58 | Windung |
| 60 | erstes Schlitzende |
| 62 | zweites Schlitzende |
| 64 | erste Schlitzachse |
| 66 | zweiter Extensionsschlitz |
| 68 | erste Teilhülse |
| 70 | zweite Teilhülse |
| 72 | Linie |
| 74 | erstes Ende erste Teilhülse |
| 76 | erstes Ende zweite Teilhülse |
| 78 | zweites Ende erste Teilhülse |
| 80 | zweites Ende zweite Teilhülse |
| 82 | zweite Linie |
| 100 | Kupplungsanordnung |
| 101 | funktionales Element |
| 102 | Kupplung |
| 104 | Stellhebel |
| 106 | erste Kupplungsscheibe |
| 108 | Kugellager |
| 108a | Außenring |
| 108b | Innenring |
| 110 | Schnittstelle |
| 112 | zweite Kupplungsscheibe |
| 114 | erster Reibbelag |
| 116 | zweiter Reibbelag |
| 118 | Antriebswelle |
| 120 | Abtriebswelle |
| 122 | napfförmige Vertiefung |
| 124a, 124b, 124c | Hebelsegmente |
| 126 | Rückstellfeder |
| 200 | Nutzfahrzeug |
| 202 | Motor |
| 204 | Getriebe |
| 206 | pneumatischer Kupplungs-Aktuator |
| A | Erstreckung in Längsrichtung |
| B | Erstreckung in Umfangsrichtung |
| AS | Stellachse |
| AL | Längsachse der Extensionshülse |
| DI | Innendurchmesser |
| DIT | Innendurchmesser erste Teilhülse |
| DAT | Außendurchmesser zweite Teilhülse |
| FL | Längskraft FL |
| FR | Rückstellkraft |
| Frad | Radialkraft |
| Freib | Reibkraft |
| FS | Stellkraft |
| FT, FT1, FT2 | Tangentialkraft |
| H | Hub |
| LG, LG1, LG2 | Gesamtlänge des pneumatischen Aktuators |
| LA | axiale Länge der Extensionshülse |
| LF | Federlänge |

| LK | Kupplungslänge |
|----|----|
| LS | Federlänge |
| M | Drehmoment |
| N | Windungszahl |
| RG1 | erste Gangrichtung |
| RG2 | zweite Gangrichtung |
| RS | Stellrichtung |
| RL | Längsrichtung der Extensionshülse |
| RR | radiale Richtung |
| $\alpha$ | Steigungswinkel |

**Patentansprüche**

1. Pneumatischer Aktuator (1) zum Betätigen eines funktionalen Elements (101), insbesondere pneumatischer Kupplungs-Aktuator (206) für ein Nutzfahrzeug (200) zum Betätigen einer Kupplung (102) des Nutzfahrzeugs (200), aufweisend

einen pneumatischen Kolben (10),
ein pneumatisches Gehäuse (4), wobei der pneumatische Kolben (10) zum Ausführen eines Hubes (H) entlang einer Stellachse (AS) verschiebbar in dem pneumatischen Gehäuse (4) angeordnet ist,
ein Schnittstellenhalter (18) mit einer Schnittstelle (110), zum Verbinden des pneumatischen Aktuators (1) mit dem funktionalen Element (101), und
eine Verschleißkompensationseinrichtung (3), die dazu ausgebildet ist, den pneumatischen Kolben (10) und den Schnittstellenhalter (18) zum Übertragen einer Stellkraft (Fs) von dem pneumatischen Kolben (10) auf den Schnittstellenhalter (18) temporär zu fixieren und die temporäre Fixierung zwischen dem pneumatischen Kolben (10) und dem Schnittstellenhalter (18) zum Ausgleichen einer verschleißbedingten Hubänderung des funktionalen Elements (101) zu lösen,
**dadurch gekennzeichnet, dass**
die Verschleißkompensationseinrichtung (3) eine Extensionshülse (22) aufweist.

2. Pneumatischer Aktuator (1) nach Anspruch 1, wobei zum Erzeugen der temporären Fixierung zwischen der Extensionshülse (22) und dem Schnittstellenhalter (18) durch radiale Kontraktion der Extensionshülse (22) eine Radialkraft ($F_{rad}$) erzeugbar ist, die von der Extensionshülse (22) auf den Schnittstellenhalter (18) wirkt.

3. Pneumatischer Aktuator (1) nach Anspruch 2, wobei die Radialkraft ($F_{rad}$) im Wesentlichen direkt proportional zur Stellkraft (Fs) ist.

4. Pneumatischer Aktuator (1) nach Anspruch 3, wobei ein Kräfteverhältnis zwischen der Radialkraft ($F_{rad}$) und der Stellkraft (Fs) einen Wert von 10 oder größer aufweist.

5. Pneumatischer Aktuator (1) nach einem der vorstehenden Ansprüche, wobei die Extensionshülse (22) einen ersten Extensionsschlitz (56) aufweist, der sich in einer ersten Gangrichtung (RG1) helixförmig um die Stellachse (AS) erstreckt.

6. Pneumatischer Aktuator (1) nach Anspruch 5, wobei der erste Extensionsschlitz (56) entlang der Stellachse (AS) zumindest eine halbe Windung (58), vorzugsweise eine vollständige Windung (58), aufweist.

7. Pneumatischer Aktuator (1) nach Anspruch 5 oder 6, wobei der erste Extensionsschlitz (56) einen ersten Steigungswinkel ($\alpha$) in einem Bereich von größer 0° bis 20°, vorzugsweise 2° bis 8°, besonders bevorzugt 3° bis 6°, aufweist.

8. Pneumatischer Aktuator (1) nach einem der Ansprüche 5 bis 7, wobei die Extensionshülse (22) einen zweiten Extensionsschlitz (66) aufweist, der sich in einer zweiten Gangrichtung (RG2) helixförmig um die Stellachse (AS) erstreckt.

9. Pneumatischer Aktuator (1) nach Anspruch 8, aufweisend eine Mehrzahl von Extensionsschlitzen, wobei die Mehrzahl von Extensionsschlitzen sich in Form einer Mehrfachhelix, insbesondere als Doppelhelix, Dreifachhelix oder Vierfachhelix, um die Stellachse erstrecken.

10. Pneumatischer Aktuator (AS) nach einem der vorstehenden Ansprüche, ferner aufweisend, eine Torsionssicherung (32) zum Verhindern einer relativen Bewegung zwischen der Extensionshülse (22) und dem Schnittstellenhalter (18).

11. Pneumatischer Aktuator (1) nach Anspruch 8 oder 10, wobei die erste Gangrichtung (RG1) und die zweite Gangrichtung (RG2) einander entgegengesetzt sind.

12. Pneumatischer Aktuator (1) nach Anspruch 10 oder 11, wobei die Extensionshülse (22) eine Sicherungsnut (40) aufweist, die sich in Stellrichtung (RS) der Stellachse (AS) erstreckt, und wobei die Torsionssicherung (32) ein Sicherungselement (34) aufweist, das in die Sicherungsnut (40) eingreift.

13. Pneumatischer Aktuator (1) nach einem der vorstehenden Ansprüche, wobei die Extensionshülse (22) eine erste Teilhülse (68) und eine zweite Teilhülse (70) aufweist, die zueinander koaxial angeordnet und miteinander verbunden sind.

14. Pneumatischer Aktuator (1) nach Anspruch 13, wobei die zweite Teilhülse (70) radial innerhalb der ersten Teilhülse (68) angeordnet ist, wobei ein erstes Ende der ersten Teilhülse (68) mit einem benachbarten ersten Ende der zweiten Teilhülse (70) verbunden ist, und wobei ein zweites Ende der ersten Teilhülse (68), das dem ersten Ende der ersten Teilhülse (68) entlang der Stellachse (AS) gegenüberliegt, mit einem zweiten Ende der zweiten Stellhülse (70), das dem ersten Ende der zweiten Teilhülse (70) entlang der Stellachse (AS) gegenüberliegt, verbunden ist.

15. Pneumatischer Aktuator (1) nach einem der vorstehenden Ansprüche, wobei die Extensionshülse (22) ein erstes Ende (28) und ein dem ersten Ende (28) entlang der Stellachse (AS) gegenüberliegendes zweites Ende (42) aufweist, wobei das erste Ende (28) in Richtung der Stellachse (AS) an dem pneumatischen Kolben (10) anliegt.

16. Pneumatischer Aktuator (1) nach Anspruch 15, aufweisend eine Feder (48), die den Schnittstellenhalter (18) gegen das zweite Ende (42) der Extensionshülse (22) vorspannt.

17. Pneumatischer Aktuator (1) nach einem der vorstehenden Ansprüche, aufweisend ein Entkopplungselement (50), das dazu ausgebildet ist, den pneumatischen Kolben (10) in einer Endstellung (55) von dem Schnittstellenhalter (18) zu entkoppeln und den Schnittstellenhalter (18) kraftleitend unmittelbar oder mittelbar mit dem pneumatischen Gehäuse (4) zu verbinden.

18. Pneumatischer Aktuator (1) nach einem der vorstehenden Ansprüche, wobei der pneumatische Kolben (10) ein Ringkolben ist, der an zumindest einer äußeren Führungsfläche (12, 14) in dem pneumatischen Gehäuse (4) geführt ist und einen inneren Aufnahmeraum (51) aufweist, wobei der Schnittstellenhalter (18) und die Verschleißkompensationseinrichtung (32) zumindest abschnittsweise in dem inneren Aufnahmeraum (51) angeordnet sind.

19. Pneumatischer Aktuator (1) nach Anspruch 17, wobei der pneumatische Kolben (10) einen im Wesentlichen uförmigen Querschnitt aufweist, der den Aufnahmeraum (51) definiert.

20. Pneumatischer Aktuator (1) nach Anspruch 5, wobei sich der erste Extensionsschlitz (56) über einen Längsabschnitt von 10 % bis weniger als 100 %, vorzugsweise 30% bis 70%, besonders bevorzugt 40% bis 60%, einer axialen Länge (LA) der Extensionshülse (22) erstreckt.

21. Pneumatischer Aktuator (1) nach Anspruch 2, wobei der Reibschluss durch radiale Kontraktion der Extensionshülse (22) um 0% bis 5% eines Innendurchmessers (DI) der Extensionshülse (22) erzeugbar ist.

22. Kupplungsanordnung (100) für ein Nutzfahrzeug (200), aufweisend eine Kupplung (102) und einen pneumatischen Aktuator (1) nach einem der vorstehenden Ansprüche 1 bis 21, wobei der pneumatische Aktuator (1) zum Öffnen und/oder Schließen der Kupplung (102) vorgesehen ist.

23. Nutzfahrzeug (200), aufweisend eine Kupplungsanordnung (100) nach Anspruch 22.

**Claims**

1. Pneumatic actuator (1) for actuating a functional element (101), in particular a pneumatic clutch actuator (206) for a commercial vehicle (200) for actuating a clutch (102) of the commercial vehicle (200), comprising

a pneumatic piston (10),
a pneumatic housing (4), wherein the pneumatic piston (10) is arranged in the pneumatic housing (4) so as to be displaceable along an adjusting axis (AS) for executing a stroke (H),
an interface holder (18) with an interface (110) for connecting the pneumatic actuator (1) to the functional element (101), and
a wear compensation device (3) which is designed to temporarily fix the pneumatic piston (10) and the interface holder (18) in order to transmit an adjusting force (Fs) from the pneumatic piston (10) to the interface holder (18) and to release the temporary fixation between the pneumatic piston (10) and the interface holder (18) in order to compensate for a wear-related stroke change of the functional element (101),
**characterized in that**
the wear compensation device (3) has an extension sleeve (22).

2. Pneumatic actuator (1) according to claim 1, wherein a radial force ($F_{rad}$), which acts from the extension sleeve (22) on the interface holder (18), can be generated by radial contraction of the extension sleeve (22) in order to produce the temporary fixation between the extension sleeve (22) and the interface holder (18).

3. Pneumatic actuator (1) according to claim 2, wherein the radial force ($F_{rad}$) is substantially directly proportional to the adjusting force (Fs).

4. Pneumatic actuator (1) according to claim 3, wherein a force ratio between the radial force ($F_{rad}$) and the adjusting force (Fs) has a value of 10 or greater.

5. Pneumatic actuator (1) according to any one of the preceding claims, wherein the extension sleeve (22) has a first extension slot (56) which extends helically around the adjusting axis (AS) in a first running direction (RG1).

6. Pneumatic actuator (1) according to claim 5, wherein the first extension slot (56) has at least a half turn (58), preferably a complete turn (58), along the adjusting axis (AS).

7. Pneumatic actuator (1) according to claim 5 or 6, wherein the first extension slot (56) has a first pitch angle ($\alpha$) in a range of greater than 0° to 20°, preferably 2° to 8°, particularly preferably 3° to 6°.

8. Pneumatic actuator (1) according to any one of claims 5 to 7, wherein the extension sleeve (22) has a second extension slot (66) which extends helically around the adjusting axis (AS) in a second running direction (RG2).

9. Pneumatic actuator (1) according to claim 8, comprising a plurality of extension slots, wherein the plurality of extension slots extend around the adjusting axis in the form of a multiple helix, in particular as a double helix, triple helix or quadruple helix.

10. Pneumatic actuator (AS) according to any one of the preceding claims, further comprising a torsion lock (32) for preventing relative movement between the extension sleeve (22) and the interface holder (18).

11. Pneumatic actuator (1) according to claim 8 or 10, wherein the first running direction (RG1) and the second running direction (RG2) are opposite to each other.

12. Pneumatic actuator (1) according to claim 10 or 11, wherein the extension sleeve (22) has a securing groove (40) which extends in the adjusting direction (RS) of the adjusting axis (AS), and wherein the torsion lock (32) has a securing element (34) which engages in the securing groove (40).

13. Pneumatic actuator (1) according to any one of the preceding claims, wherein the extension sleeve (22) has a first partial sleeve (68) and a second partial sleeve (70) which are arranged coaxially with one another and are connected to one another.

14. Pneumatic actuator (1) according to claim 13, wherein the second partial sleeve (70) is arranged radially inside the first partial sleeve (68), wherein a first end of the first partial sleeve (68) is connected to an adjacent first end of the second partial sleeve (70), and wherein a second end of the first partial sleeve (68), which is opposite the first end of the first partial sleeve (68) along the adjusting axis (AS), is connected to a second end of the second adjusting sleeve (70), which is opposite the first end of the second partial sleeve (70) along the adjusting axis (AS).

15. Pneumatic actuator (1) according to any one of the preceding claims, wherein the extension sleeve (22) has a first end (28) and a second end (42) opposite the first end (28) along the adjusting axis (AS), wherein the first end (28) rests against the pneumatic piston (10) in the direction of the adjusting axis (AS).

16. Pneumatic actuator (1) according to claim 15, comprising a spring (48) which biases the interface holder (18) against the second end (42) of the extension sleeve (22).

17. Pneumatic actuator (1) according to any one of the preceding claims, comprising a decoupling element (50) which is designed to decouple the pneumatic piston (10) from the interface holder (18) in an end position (55) and to connect the interface holder (18) directly or indirectly to the pneumatic housing (4) in a force-conducting manner.

18. Pneumatic actuator (1) according to any one of the preceding claims, wherein the pneumatic piston (10) is an annular piston which is guided on at least one outer guide surface (12, 14) in the pneumatic housing (4) and has an inner receiving space (51), wherein the interface holder (18) and the wear compensation device (32) are arranged at least partly in the inner receiving space (51).

19. Pneumatic actuator (1) according to claim 17, wherein the pneumatic piston (10) has a substantially U-shaped cross section defining the receiving space (51).

20. Pneumatic actuator (1) according to claim 5, wherein the first extension slot (56) extends over a longitudinal section of from 10% to less than 100%, preferably 30% to 70%, particularly preferably 40% to 60%, of an axial length (LA) of the extension sleeve (22).

21. Pneumatic actuator (1) according to claim 2, wherein the frictional connection can be produced by radial contraction of the extension sleeve (22) by 0% to 5% of an inner diameter (DI) of the extension sleeve (22).

22. Clutch arrangement (100) for a commercial vehicle (200), comprising a clutch (102) and a pneumatic actuator (1) according to any one of the preceding claims 1 to 21, wherein the pneumatic actuator (1) is provided for opening and/or closing the clutch (102).

23. Commercial vehicle (200) comprising a clutch arrangement (100) according to claim 22.

**Revendications**

1. Actionneur pneumatique (1) destiné à actionner un élément fonctionnel (101), en particulier actionneur d'embrayage pneumatique (206) pour un véhicule utilitaire (200) destiné à actionner un embrayage (102) du véhicule utilitaire (200), présentant

   un piston pneumatique (10),
   un boîtier pneumatique (4), dans lequel le piston pneumatique (10) est disposé de manière à pouvoir être déplacé dans le boîtier pneumatique (4) pour la réalisation d'une course (H) le long d'un axe de réglage (AS),
   un support d'interface (18) comportant une interface (110), pour le raccordement de l'actionneur pneumatique (1) à l'élément fonctionnel (101), et
   un dispositif de compensation d'usure (3) qui est conçu pour fixer temporairement le piston pneumatique (10) et le support d'interface (18) pour la transmission d'une force de réglage (Fs) du piston pneumatique (10) au support d'interface (18) et pour libérer la fixation temporaire entre le piston pneumatique (10) et le support d'interface (18) pour la compensation d'une variation de course de l'élément fonctionnel (101) due à l'usure,
   **caractérisé en ce que**
   le dispositif de compensation d'usure (3) présente une douille d'extension (22).

2. Actionneur pneumatique (1) selon la revendication 1, dans lequel, pour la génération de la fixation temporaire entre la douille d'extension (22) et le support d'interface (18), une force radiale ($F_{rad}$) peut être générée par contraction radiale de la douille d'extension (22), qui agit de la douille d'extension (22) sur le support d'interface (18).

3. Actionneur pneumatique (1) selon la revendication 2, dans lequel la force radiale ($F_{rad}$) est sensiblement directement proportionnelle à la force de réglage (Fs).

4. Actionneur pneumatique (1) selon la revendication 3, dans lequel un rapport de force entre la force radiale ($F_{rad}$) et la force de réglage (Fs) présente une valeur de 10 ou plus.

5. Actionneur pneumatique (1) selon l'une des revendications précédentes, dans lequel la douille d'extension (22) présente une première fente d'extension (56) qui s'étend en hélice autour de l'axe de réglage (AS) dans un premier sens de marche (RG1).

6. Actionneur pneumatique (1) selon la revendication 5, dans lequel la première fente d'extension (56) présente, le long de l'axe de réglage (AS), au moins une demi-spire (58), de préférence une spire complète (58).

7. Actionneur pneumatique (1) selon la revendication 5 ou 6, dans lequel la première fente d'extension (56) présente un premier angle d'inclinaison ($\alpha$) dans une plage allant de plus de 0 ° à 20 °, de préférence de 2 ° à 8 °, de manière particulièrement préférée de 3 ° à 6 °.

8. Actionneur pneumatique (1) selon l'une des revendications 5 à 7, dans lequel la douille d'extension (22) présente une seconde fente d'extension (66) qui s'étend en hélice autour de l'axe de réglage (AS) dans un second sens de marche (RG2).

9. Actionneur pneumatique (1) selon la revendication 8, présentant une pluralité de fentes d'extension, dans lequel la pluralité de fentes d'extension s'étendent autour de l'axe de réglage sous la forme d'une hélice multiple, en particulier une double hélice, une triple hélice ou une quadruple hélice.

10. Actionneur pneumatique (AS) selon l'une des revendications précédentes, présentant en outre, une sécurité anti-torsion (32) pour l'empêchement d'un mouvement relatif entre la douille d'extension (22) et le support d'interface (18).

11. Actionneur pneumatique (1) selon la revendication 8 ou 10, dans lequel le premier sens de marche (RG1) et le second sens de marche (RG2) sont opposés l'un à l'autre.

12. Actionneur pneumatique (1) selon la revendication 10 ou 11, dans lequel la douille d'extension (22) présente une rainure de sécurité (40) qui s'étend dans la direction de réglage (RS) de l'axe de réglage (AS), et dans lequel la sécurité anti-torsion (32) présente un élément de sécurité (34) qui vient en prise dans la rainure de sécurité (40).

13. Actionneur pneumatique (1) selon l'une des revendications précédentes, dans lequel la douille d'extension (22) présente une première douille partielle (68) et une seconde douille partielle (70) qui sont disposées coaxialement l'une par rapport à l'autre et reliées entre elles.

14. Actionneur pneumatique (1) selon la revendication 13, dans lequel la seconde douille partielle (70) est disposée radialement à l'intérieur de la première douille partielle (68), dans lequel une première extrémité de la première douille partielle (68) est reliée à une première extrémité adjacente de la seconde douille partielle (70), et dans lequel une seconde extrémité de la première douille partielle (68), qui est opposée à la première extrémité de la première douille partielle (68) le long de l'axe de réglage (AS), est reliée à une seconde extrémité de la seconde douille de réglage (70), qui est opposée à la première extrémité de la seconde douille partielle (70) le long de l'axe de réglage (AS).

15. Actionneur pneumatique (1) selon l'une des revendications précédentes, dans lequel la douille d'extension (22) présente une première extrémité (28) et une seconde extrémité (42) opposée à la première extrémité (28) le long de l'axe de réglage (AS), dans lequel la première extrémité (28) est en appui contre le piston pneumatique (10) dans la direction de l'axe de réglage (AS).

16. Actionneur pneumatique (1) selon la revendication 15, présentant un ressort (48) qui sollicite le support d'interface (18) contre la seconde extrémité (42) de la douille d'extension (22).

17. Actionneur pneumatique (1) selon l'une des revendications précédentes, présentant un élément de découplage (50) qui est conçu pour découpler le piston pneumatique (10) du support d'interface (18) dans une position finale (55) et pour relier le support d'interface (18) directement ou indirectement au boîtier pneumatique (4) par conduction de force.

**18.** Actionneur pneumatique (1) selon l'une des revendications précédentes, dans lequel le piston pneumatique (10) est un piston annulaire qui est guidé sur au moins une surface de guidage extérieure (12, 14) dans le boîtier pneumatique (4) et présente un espace de réception (51) intérieur, dans lequel le support d'interface (18) et le dispositif de compensation d'usure (32) sont disposés au moins par sections dans l'espace de réception (51) intérieur.

**19.** Actionneur pneumatique (1) selon la revendication 17, dans lequel le piston pneumatique (10) présente une section transversale sensiblement en forme de U, qui définit l'espace de réception (51).

**20.** Actionneur pneumatique (1) selon la revendication 5, dans lequel la première fente d'extension (56) s'étend sur une section longitudinale de 10 % à moins de 100 %, de préférence de 30 % à 70 %, de manière particulièrement préférée de 40 % à 60 %, d'une longueur axiale (LA) de la douille d'extension (22).

**21.** Actionneur pneumatique (1) selon la revendication 2, dans lequel l'adhérence par friction peut être générée par contraction radiale de la douille d'extension (22) de 0 % à 5 % d'un diamètre intérieur (DI) de la douille d'extension (22).

**22.** Ensemble embrayage (100) pour un véhicule utilitaire (200), présentant un embrayage (102) et un actionneur pneumatique (1) selon l'une des revendications 1 à 21 précédentes, dans lequel l'actionneur pneumatique (1) est prévu pour l'ouverture et/ou la fermeture de l'embrayage (102).

**23.** Véhicule utilitaire (200) présentant un ensemble embrayage (100) selon la revendication 22.

**FIG. 1a**

**FIG. 1b**

FIG. 2a

$F_R$   A   8   $F_R$   110, 108   1, 2

32   18   34,36

20

28,30   51   108a

22   3

$F_{rad}$   12   10

52

4   $F_F$   24

38   $L_F$   48

26   50

42,46   44

$F_S$   $F_S$   54

6   16

40

RR

RS, $L_R$

EP 4 326 995 B1

FIG. 2b

FIG. 2c

EP 4 326 995 B1

**FIG. 2d**

EP 4 326 995 B1

FIG. 3a

FIG. 3b

**FIG. 3c**

FIG. 4

FIG. 5

EP 4 326 995 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016184569 A1
- EP 2683960 B1
- DE 102017210444 A1
- DE 102019204352 A1
- DE 102018210628 A1